(19)

**Europäisches Patentamt**

**European Patent Office**

**Office européen des brevets**

(11)  **EP 4 047 412 A1**

(12) **EUROPEAN PATENT APPLICATION**

(43) Date of publication:
**24.08.2022  Bulletin 2022/34**

(21) Application number: **21158001.4**

(22) Date of filing: **18.02.2021**

(51) International Patent Classification (IPC):
**G02C 7/02** *(2006.01)*     **G02B 1/113** *(2015.01)*
**G02B 1/115** *(2015.01)*

(52) Cooperative Patent Classification (CPC):
**G02C 7/02; G02B 1/115**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Carl Zeiss Vision International GmbH
73430 Aalen (DE)**

(72) Inventors:
• **Neuffer, Andreas
  71679 Asperg (DE)**
• **Glöge, Thomas
  73614 Schorndorf (DE)**
• **Laukart, Artur
  73432 Aalen (DE)**

(74) Representative: **Carl Zeiss AG - Patentabteilung
Carl-Zeiss-Straße 22
73447 Oberkochen (DE)**

(54) **COATED LENS BASED ON A LENS SUBSTRATE COMPRISING DIFFERENT OPTICAL MATERIALS OR A SINGLE OPTICAL MATERIAL**

(57)     The invention relates to a coated lens comprising a lens substrate and at least one coating, the lens substrate comprising (i) at least two different optical materials or (ii) a single optical material, and a method for manufacturing such a coated lens.

**EP 4 047 412 A1**

**Description**

The invention relates to a coated lens comprising a lens substrate and at least one coating, the lens substrate comprising (i) at least two different optical materials or (ii) a single optical material, and a method for manufacturing such a coated lens.

Coated lenses are according to ISO 13666:2019(E), section 3.18.1, lenses to which one or more surface layers have been added to alter one or more properties of the lens. A lens or spectacle lens is according to ISO 13666:2019(E), section 3.5.1, an ophthalmic lens worn in front of, but not in contact with, the eyeball. Coated lenses are typically based on a lens substrate of a single optical material. The optical material, according to ISO 13666:2019(E), section 3.3.1, a transparent material capable of being manufactured into optical components, may be either a glass, a thermosetting hard resin or a thermoplastic hard resin. According to ISO 13666:2019(E), section 3.3.2, a glass, inorganic glass or mineral glass is a material formed by the fusion of inorganic substance, cooled down and solidified without crystallizing. According to ISO 13666:2019(E), section 3.3.3, a thermosetting hard resin is a plastic material, consisting principally of organic polymers, that has been cured into an essentially infusible and insoluble state, and cannot be usefully reshaped on heating. According to ISO 13666:2019(E), section 3.3.4, a thermoplastic hard resin is a plastic material consisting principally of organic polymers, that can be repeatedly softened by heating and hardened by cooling, and in the softened state can be shaped by flow into lenses or blanks by moulding, extrusion and forming. Typically, a wearer selects the optical material of a spectacle lens, preferably a coated lens, according to personal preferences. Wearers appreciating for example the high imaging quality, the high scratch resistance and/or the durability might preferably decide for spectacle lenses, preferably coated lenses, based on a glass. Wearers highly appreciating for example the low weight might preferably decide for spectacle lenses, preferably coated lenses, based on a thermosetting hard resin or a thermoplastic hard resin.

Spectacle lenses based on different optical materials may combine the advantages of the respective optical materials. Spectacle lenses comprising different optical materials are described for example in EP 0 182 503 A2, EP 3 396 439 A1 or EP 3 474 063 A1.

EP 0 182 503 A2 discloses a composite glass/plastic ophthalmic lens consisting of a glass layer of nearly uniform thickness and a plastic lens or plastic blank. The curvature of the back surface of the glass layer has a slightly larger radius of curvature than the radius of curvature of the front surface of the plastic lens or the plastic blank. This difference in curvature results in a radially tapered gap between the two adjacent surfaces, the radially tapered gap having its maximum distance at the edge. The two adjacent surfaces are bonded via an adhesive, which is optically clear, highly elastic and substantially inert over a wide temperature and humidity range. The glass layer may be either clear or may provide photochromic characteristics to the composite glass/plastic ophthalmic lens.

EP 3 396 439 A1 discloses a glass and plastic ophthalmic lens. The lens includes a first glass layer, a second adhesive layer and a third plastic layer, wherein the optical power difference between the first glass layer and the third plastic layer is from 0 to 0.1 Diopter (D). The concave surface of the first glass layer is laminated to the convex surface of the third plastic layer. The thickness of the second adhesive layer, which is a photocurable adhesive, is from 0.001 to 0.5 mm.

EP 3 474 063 A1 discloses an optical lens comprising a mineral glass element on the front surface and an eye protector arranged at least on the rear surface. The eye protector, comprising a polymer wafer, should prevent any piece of the mineral glass element from reaching the wearer's eye when the element is broken. The mineral glass element and the polymer wafer may be either piano or may have a dioptric function. The mineral glass element may comprise at least an electro active element, such as electrochromic cells, liquid crystal cells, a wave guide and/or a holographic mirror. The polymer wafer may have an anti-scratch function, an anti-static function, an anti-fouling function, an anti-fog function, a light absorption function, for example blue cut and/or UV protection, or a reflection function, for example antireflective properties.

WO 2014/202391 A1 discloses optical components comprising a layer system. The layer system is made of a thin glass film and a plastic material. The optical material may be used as mirror, lens, window, beam distributor or waveguide, for example. The planar thin glass film may be coated with an optical coating, for example an anti-reflective coating. The coated planar thin glass film is then formed and assembled with the plastic material. The plastic material may comprise a UV absorbing coating.

Coated lenses of high quality typically comprise on the front surface, according to ISO 13666:2019(E), section 3.2.13, the surface of the lens intended to be fitted away from the eye, and on the back surface, according to ISO 13666:2019(E), section 3.2.14, the surface of the lens intended to be fitted nearer to the eye, at least one anti-reflective coating. An anti-reflective coating is according to ISO 13666:2019(E), section 3.18.3, a coating on the surface of a lens intended to reduce light reflected from its surfaces. An anti-reflective coating typically comprises an interference layer system which comprises at least two layers with various optical characteristics and thicknesses. An anti-reflective coating is preferably applied via physical vapor deposition coating techniques. The luminous transmittance, according to ISO 13666:2019(E), section 3.17.6, the ratio of the luminous flux transmitted by the lens or filter to the incident luminous flux for a specified illuminant and photopic vision, of a coated lens comprising at least one anti-reflective coating on the front surface and on the back surface thereof is increased to >98% compared to the luminous transmittance of the respective uncoated lens substrate which is approximately 90% to 92%. In case a coated lens is based on a lens substrate of a single optical material, the front surface and the back surface thereof may comprise the same coating(s) and/or the same coating sequence which may be applied under identical or at least similar process conditions. To apply the same anti-reflective coating to the front surface and to the back surface, the distance of the surface to be coated to the coating source typically needs to be considered. A coated lens may comprise different anti-reflective coatings on the front surface and on the back surface, for example dependent of the function the respective anti-reflective coating should fulfill. In case a spectacle is based on a lens substrate comprising at least two different optical materials, one optical material being a glass and one optical material being a thermosetting hard resin or a thermoplastic hard resin, the process conditions for applying at least one coating are not necessarily identical and at worst incompatible to the process conditions for applying at least one coating to a lens substrate comprising a single optical material. In case, the lens substrate comprises a glass, the process conditions to apply for example an anti-reflective coating tolerate temperatures > 200°C and are preferably ranging from 220°C to 300°C. In case, the lens substrate comprises a thermosetting hard resin or a thermoplastic hard resin, the process conditions to apply for example an anti-reflective coating and optionally a clean coating typically uses temperatures < 80°C to avoid any deterioration of the optical and/or mechanical properties of the respective lens substrate. Therefore, a lens substrate comprising a glass and a thermosetting hard resin or a thermoplastic hard resin, could not be coated with an anti-reflective coating by using the process conditions typically applied for coating a lens substrate based on a glass, in particular by using the higher temperatures typically tolerated by a lens substrate based on a glass. Further, an anti-reflective coating that is optimized or adapted with respect to one optical material is not necessarily applicable to another optical material, in particular if one optical material is a glass and the other one is a thermosetting hard resin or a thermoplastic hard resin. For example, in case an anti-reflective coating and a clean coating are applied to a lens substrate based on a glass by using the identical process conditions as for applying the identical anti-reflective coating and the identical clean coating to a lens substrate based on a thermosetting hard resin or a thermoplastic hard resin, in particular by using the lower temperatures not deteriorating the respective resin, the resulting anti-reflective coating does not necessarily meet the quality requirements for a coated lens. For example, the scratch resistance of such a coated lens can be much lower than the scratch resistance obtainable with the identical anti-reflective coating applied to a lens substrate based on a thermosetting hard resin or a thermoplastic hard resin.

Therefore, it has been the problem of the invention to provide a coating for a spectacle lens, the identical coating being applicable to lens substrates of different optical materials or to lens substrates comprising different optical materials. Further, it has been the problem of the invention to provide a method for manufacturing a coated lens based on a lens substrate comprising different optical materials without the necessity of subsequently assembling different coated optical materials.

The problem has been solved by the products according to claim 1 and 13 and the method for manufacturing a coated lens according to claim 10.

The coated lens comprises a lens substrate, the lens substrate preferably comprises at least two different optical materials. Preferably the lens substrate comprises at least one optical material comprising a glass and at least one optical material comprising a thermosetting hard resin or a thermoplastic hard resin. Further preferably, the lens substrate comprises the at least two different optical materials according to one of the following alternatives:

i) at least one optical material comprising a glass forming the front surface of the lens substrate and at least one optical material comprising a thermosetting hard resin or a thermoplastic hard resin forming the back surface thereof, or

ii) at least one optical material comprising a thermosetting hard resin or a thermoplastic hard resin forming the front surface of the lens substrate and at least one optical material comprising a glass forming the back surface thereof, or

iii) at least one optical material comprising a glass forming the front surface of the lens substrate, at least one optical material comprising at least one of the group consisting of a thermosetting hard resin and a thermoplastic hard resin forming at least one intermediate layer of the lens substrate and at least one optical material comprising a glass forming the back surface thereof, or

iv) at least one optical material comprising a thermosetting hard resin or a thermoplastic hard resin forming the front surface of the lens substrate, at least one optical material comprising at least a glass forming at least one intermediate layer of the lens substrate and at least one optical material comprising a thermosetting hard resin or a thermoplastic hard resin forming the back surface thereof.

In the alternative iii) the front surface and the back surface may comprise a glass that may be identical or different, for example identical or different at least with respect to the glass composition and/or the thickness and/or the surface topography. Preferably, in alternative iii) the front surface and the back surface comprises a glass that is identical with respect to the glass composition and/or the thickness and/or the surface topography. In the alternative iv) the front surface and the back surface may comprise a thermosetting hard resin or a thermoplastic hard resin, each thermosetting hard resin may be identical or different and each thermoplastic hard resin may be identical or different, each being identical or different at least with respect to the composition. More preferably, the lens substrate comprises at least two optical materials according to the before mentioned alternative i) or according to the before mentioned alternative iii). Most preferably, the lens substrate comprises the at least two optical materials according to the before mentioned alternative i).

In a lens substrate comprising at least two different optical materials selected from a) at least one glass and at least one thermosetting hard resin or selected from b) at least one glass and at least one thermoplastic hard resin, the at least one glass preferably comprises at least one thin glass. Each thin glass may be based on various glass compositions. Preferably, the glass composition of each thin glass is based on a borosilicate glass, an aluminum borosilicate glass or an alkali-free borosilicate glass, more preferably the glass composition is based on a borosilicate glass. The thickness of each thin glass preferably lies in a range from 30 $\mu$m to 300 $\mu$m, further preferably in a range from 40 $\mu$m to 280 $\mu$m, further preferably in a range from 50 $\mu$m to 260 $\mu$m, more preferably in a range from 60 $\mu$m to 240 $\mu$m and most preferably in a range from 90 $\mu$m to 220 $\mu$m. The thickness of each thin glass preferably is determined of the respective planar thin glass before the forming into its final form and shape. Preferably, the thickness of each thin glass is determined with the Filmetrics F10-HC instrument, company Filmetrics Inc. Preferably, the thickness of each thin glass is the average thickness. The average surface roughness of each thin glass surface, preferably each thin glass front and back surface, preferably is Ra < 1 nm. Further preferably, the average surface roughness Ra of each thin glass surface is within a range from 0.1 nm to 0.8 nm, more preferably within a range from 0.3 nm to 0.7 nm and most preferably within a range from 0.4 nm to 0.6 nm. The values given for the average surface roughness Ra preferably apply with respect to each thin glass surface before forming into the final form and shape. Depending on the shaped body used for forming, the values given for the average surface roughness Ra may apply with respect to the thin glass surface in its final form and shape as well. The average surface roughness Ra of each thin glass surface preferably is determined with the NewView 7100 instrument, company Zygo Corporation.

The thin glass comprises a surface topography selected from at least one of a spherical surface, according to ISO 13666:2019(E), section 3.4.1, defined as part of the inside or outside surface of a sphere; an aspherical surface, according ISO 13666:2019(E), section 3.4.3, defined as surface of revolution having continuously variable curvature over all or part of its areas; a toroidal surface, according to ISO 13666:2019(E), section 3.4.6, defined as surface having mutually perpendicular and circular principal meridians of unequal curvature; an atoroidal surface, according to ISO 13666:2019(E), section 3.4.7, defined as surface having mutually perpendicular principal meridians of unequal curvature, at least one of which has asphericity; and a power-variation surface, according to ISO 13666:2019(E), section 3.4.10, defined as surface with a smooth variation of surface power over part or all of its area, without discontinuity. Preferably, the surface topographies of the front surface and the back surface of the thin glass are identical.

Thin glasses are commercially available, for example, under the names: D 263 T eco, D 263 LA eco, D 263 M, AF 32 eco, AS 87 eco, B 270 I, each from Schott AG, or Corning Willow Glass or Corning Gorilla Glass, each from Corning Inc.

In a lens substrate comprising a) at least one thin glass and at least one thermosetting hard resin or b) at least one thin glass and at least one thermoplastic hard resin, the at least one thin glass may be clear according to the definition given in ISO 13666:2019(E), section 3.5.7, for a clear lens, absorptive according to the definition given in ISO 13666:2019(E), section 3.5.5, for an absorptive lens, tinted according to the definition given in ISO 13666:2019(E), section 3.5.6, for a tinted lens, or photochromic according to the definition given in ISO 13666:2019(E), section 3.5.11, for a photochromic lens. Preferably, the at least one thin glass is clear within the definition of a clear lens according to ISO 13666:2019(E), section 3.5.7, i.e. with no intended color/tint in transmission.

In the lens substrate comprising a) at least one thin glass and at least one thermosetting hard resin or b) at least one thin glass and at least one thermoplastic hard resin, the at least one thermosetting hard resin or the at least one thermoplastic hard resin each may be clear, absorptive, tinted, photochromic, each according to the definitions given in ISO 13666:2019(E) mentioned before, and/or the at least one thermosetting hard resin or the at least one thermoplastic hard resin may be polarizing according to the definition given in ISO 13666:2019(E), section 3.5.12. Preferably, the at least one thermosetting hard resin or the at least one thermoplastic hard resin is clear.

Further, in the lens substrate comprising a) at least one thin glass and at least one thermosetting hard resin or b) at least one thin glass and at least one thermoplastic hard resin, the at least one thermosetting hard resin or the at least one thermoplastic hard resin each may be classified according to the state of manufacture as an uncoated or precoated blank, the blank being defined in ISO 13666:2019(E), section 3.8.1, as piece of optical material with one optically finished surface for the making of a lens; as an uncoated or precoated single-vision blank, the single-vision blank being defined in ISO 13666:2019(E), section 3.8.2, as blank with the finished surface having a single nominal surface power; as an uncoated or precoated multifocal blank, the multifocal blank being defined in ISO 13666:2019(E), section 3.8.3, as blank with the finished surface having two or more visibly divided portions of different dioptric powers or focal powers; as an uncoated or precoated progressive-power blank, the progressive-power blank being defined in ISO 13666:2019(E), section 3.8.5, as power-variation blank where the finished surface is a progressive-power surface; as an uncoated or precoated degressive-power blank, the degressive-power blank being defined in ISO 13666:2019(E), section 3.8.6, as power-variation blank where the finished surface is a degressive-power surface; as an uncoated or precoated finished lens, the finished lens being defined in ISO 13666:2019(E), section 3.8.7, as lens of which both sides have their final optical surface; as an uncoated or precoated uncut lens, the uncut lens being defined in ISO 13666:2019(E), section 3.8.8, as finished lens prior to edging; or as an uncoated or precoated edged lens, the edged lens being defined in ISO 13666:2019(E), section 3.8.9, as finished lens edged to final size and shape. If one of the before mentioned blanks is precoated, the respective final optical surface comprises at least one coating. If one of the before mentioned lenses is precoated, at least one side thereof comprises at least one coating. Needless to say, prior to the assembling of the different optical materials, the surfaces which are facing each other or are adjacent in the resulting lens substrate must have their final optical surface and optionally their at least one coating. Preferably, the at least one thermosetting hard resin or the at least one thermoplastic hard resin each may be classified as an uncoated or precoated finished lens or an uncoated or precoated uncut lens.

Alternatively, in the lens substrate comprising a) at least one thin glass and at least one thermosetting hard resin or b) at least one thin glass and at least one thermoplastic hard resin, the at least one thermosetting hard resin or the at least one thermoplastic hard resin each may be classified according to the form as afocal lens with nominally zero dioptric power according to ISO 13666:2019(E), section 3.6.3, or according to the function as corrective lens according to ISO 13666:2019(E), section 3.5.3, as a lens with dioptric power.

Alternatively, in the lens substrate comprising a) at least one thin glass and at least one thermosetting hard resin or b) at least one thin glass and at least one thermoplastic hard resin, the at least one thermosetting hard resin or the at least one thermoplastic hard resin each may be classified according to the type as single-vision lens according to ISO 13666:2019(E), section 3.7.1; as position-specific single-vision lens according to ISO 13666:2019(E), section 3.7.2; as multifocal lens according to ISO 13666:2019(E), section 3.7.3; as bifocal lens according to ISO 13666:2019(E), section 3.7.4; as trifocal lens according to ISO 13666:2019(E), section 3.7.5; as fused multifocal lens according to ISO 13666:2019(E), section 3.7.6; as power-variation lens according to ISO 13666:2019(E), section 3.7.7; as progressive-power lens according to ISO 13666:2019(E), section 3.7.8; or as degressive-power lens according to ISO 13666:2019(E), section 3.7.9.

Further, in the lens substrate comprising a) at least one thin glass and at least one thermosetting hard resin or b) at least one thin glass and at least one thermoplastic hard resin, the at least one thermosetting hard resin or the at least one thermoplastic hard resin preferably comprises at least one of the resins mentioned in table 1 below.

Table 1: Thermosetting hard resins or thermoplastic hard resins

| Trade name | Resin | Average refractive index $n_D$* | Abbe number $v_D$* |
|---|---|---|---|
| CR-39, CR-330, CR-607, CR-630, RAV 700, RAV 7NG, RAV 7AT, RAV 710, RAV 713, RAV 720 | Polyallyldiglycol carbonate ((P) ADC) | 1.500 | 56 |
| RAVolution | Polyurea / Polyurethane | 1.500 | 54 |
| Trivex | Polyurea / Polyurethane | 1.530 | 45 |
| Panlite, Lexan, Makrolon | Polycarbonate (PC) | 1.590 | 29 |
| MR-6 | Polythiourethane | 1.598 | |
| MR-8 | Polythiourethane | 1.598 | 41 |
| MR-7 | Polythiourethane | 1.664 | 32 |
| MR-10 | Polythiourethane | 1.666 | 32 |
| MR-174 | Polyepisulfide | 1.738 | 32 |
| MGC 1.76 | Polyepisulfide | 1.76 | 30 |
| Spectralite | Urethane /Methacrylate | 1.54 | |

The surface of the lens substrate comprising an optical material selected from at least one of a thermosetting hard resin and a thermoplastic hard resin may be coated with a coating sequence that is usually applied to a lens substrate consisting of a single thermosetting hard resin or a single thermoplastic hard resin. The respective surface may comprise in the coating sequence at least one coating selected from the group consisting of at least one primer coating; at least one hard coating, according to ISO 13666:2019(E), section 3.18.2, being a coating on the surface of an organic lens intended to enhance the abrasion resistance of the surface during normal use; at least one anti-reflective coating, according to ISO 13666:2019(E), section 3.18.3, being a coating on the surface of a lens intended to reduce light reflected from its surfaces; at least one clean coating, according to ISO 13666:2019(E), section 3.18.4, being a coating on the surface of a lens intended to make the surface repel dust and grease and/or to make it easier to clean; at least one hydrophobic coating, according to ISO 13666:2019(E), section 3.18.5, being a coating on the surface of a lens intended to repel water droplets; at least one hydrophilic coating, according to ISO 13666:2019(E), section 3.18.6, being a coating on the surface of a lens intended to wet very easily, so that water droplets on it spread and coalesce to a uniform film on the surface; at least one anti-fog coating, according to ISO 13666:2019(E), section 3.18.7, being a hydrophobic or hydrophilic coating on the surface of a lens intended to reduce blur caused by droplets of condensed water vapor on the lens' surface when a relatively cold lens is put into a warmer, humid environment; at least one anti-static coating, according to ISO 13666:2019(E), section 3.18.8, being a coating on the surface of a lens intended to reduce static electricity on the surface, in order to reduce the attraction of dust; and at least one photochromic coating. In case, the lens substrate comprises for example the two different optical materials according to one of the preferred alternatives i) or ii) described before, preferably the optical material selected from at least one of a thermosetting hard resin and a thermoplastic hard resin is coated prior to the assembly with the optical material comprising a glass. The surface of the respective resin that is after the assembly facing or adjacent to the surface of the glass as well as the surface of the respective resin that is after the assembly not facing or not adjacent to the surface of the glass may be coated with at least one the before mentioned coatings. In case, the lens substrate comprises for example the two different optical materials according to one of the preferred alternatives iii) or iv) described before, should comprise at least one coating in between the different optical materials, for example at least one of the before mentioned coatings, at least one of the surfaces facing or being adjacent to another surface of an optical material must be coated prior to the assembly of the respective optical materials.

Preferably, the surface of the lens substrate comprising an optical material selected from at least one of a thermosetting hard resin and a thermoplastic hard resin comprises a coating sequence which comprises optionally at least one primer coating, at least one hard coating, at least one anti-reflective coating, preferably one anti-reflective coating, at least one clean coating, preferably one clean coating. Further preferably, the surface of the lens substrate comprising an optical material selected from at least one of a thermosetting hard resin and a thermoplastic hard resin comprises a coating sequence which comprises beginning from the surface of the lens substrate optionally at least one primer coating, preferably one primer coating, at least one hard coating, preferably one hard coating, at least one anti-reflective coating, preferably one anti-reflective coating, at least one clean coating, preferably one clean coating.

At least one of the surfaces of the lens substrate comprising an optical material selected from at least one of a thermosetting hard resin and a thermoplastic hard resin, preferably in the alternatives ii) and iv) described before the front surface of the respective lens substrate, may comprise at least one of the photochromic coatings disclosed in EP 1 433 814 A1, EP 1 602 479 A1, or EP 1 561 571 A1. At least one of the surfaces of the lens substrate comprising an optical material selected from at least one of a thermosetting hard resin and a thermoplastic hard resin, preferably in the alternatives ii) and iv) described before the front surface of the respective lens substrate may further comprise at least one photochromic primer, for example the one disclosed in WO 03/058300 A1, page 22, line 3 to page 23, line 13.

At least one of the surfaces of the lens substrate comprising an optical material selected from at least one of a thermosetting hard resin and a thermoplastic hard resin, preferably in the alternatives ii) and iv) described before the front surface and optionally the back surface of the respective lens substrate, may comprise at least one primer coating, the at least one primer coating preferably being based on at least one primer coating composition comprising i) at least one aqueous aliphatic, cycloaliphatic, aromatic or heteroaromatic polyurethane dispersion, at least one aqueous aliphatic, cycloaliphatic, aromatic or heteroaromatic polyurea dispersion, at least one aqueous aliphatic, cycloaliphatic, aromatic or heteroaromatic polyurethane-polyurea dispersion and/or at least one aqueous aliphatic, cycloaliphatic, aromatic or heteroaromatic polyester dispersion, preferably at least one aqueous aliphatic polyurethane dispersion or at least one aqueous aliphatic polyester dispersion and more preferably at least one aqueous aliphatic polyurethane dispersion, and ii) at least one solvent, and iii) optionally at least one additive.

At least one of the surfaces of the lens substrate comprising an optical material selected from at least one of a thermosetting hard resin and a thermoplastic hard resin, preferably in the alternatives ii) and iv) described before the front surface and optionally the back surface of the respective lens substrate, may comprise at least one hard coating selected from at least one of the hard coatings disclosed in US 2005/0171231 A1, US 2009/0189303 A1, US 2002/0111390 A1 and EP 2 578 649 A1. The at least one hard coating is based on i) at least one hard coating composition comprising

A)

    a) at least one silane derivative of the formula (I) $Si(OR^1)(OR^2)(OR^3)(OR^4)$, wherein $R^1$, $R^2$, $R^3$ and $R^4$, which may be the same or different, are selected from an alkyl, an acyl, an alkyleneacyl, a cycloalkyl, an aryl or an alkylenearyl group, each of which may optionally be substituted, and/or
    b) at least one hydrolysis product of the at least one silane derivative of the formula (I), and/or
    c) at least one condensation product of the at least one silane derivative of the formula (I), and/or
    d) any mixture of the components a) to c) thereof;

B)

    a) at least one silane derivative of the formula (II) $R^6R^7{}_{3-n}Si(OR^5)_n$, in which $R^5$ is selected from an alkyl, an acyl, an alkyleneacyl, a cycloalkyl, an aryl or an alkylenearyl group, each of which may optionally be substituted, $R^6$ is an organic radical containing at least one epoxide group, $R^7$ is selected from an alkyl, a cycloalkyl, an aryl or an alkylenearyl group, each of which may optionally be substituted, n is 2 or 3; and/or
    b) at least one hydrolysis product of the at least one silane derivative of the formula (II), and/or
    c) at least one condensation product of the at least one silane derivative of the formula (II), and/or
    d) any mixture of the components a) to c) thereof;

C) at least one colloidal inorganic oxide, hydroxide, oxide hydrate, fluoride and/or oxyfluoride;
D) at least one epoxide compound having at least two epoxide groups; and
E) at least one catalyst system comprising at least one Lewis acid and at least one thermolatent Lewis acid-base adduct;

or ii) at least one hard coating composition comprising

A)

    a) at least one silane derivative of the formula (III) $R^1R^2{}_{3-n}Si(OR^3)_n$, wherein $R^1$ comprises an alkyl group, a cyclo alkyl group, an acyl group, an aryl group or a hetero aryl group, each of which may be substituted, $R^2$ is an organic rest comprising an epoxide group, $R^3$ comprises an alkyl group, a cyclo alkyl group, an aryl group or a hetero aryl group, each of which may be substituted, n = 2 or 3, and/or
    b) at least one hydrolysis product of the silane derivative of the formula (III), and/or
    c) at least one condensation product of the silane derivative of the formula (III), and/or
    d) any mixture of components a) to c);

B) at least one colloidal inorganic oxide, hydroxide, oxide hydrate, fluoride and/or oxyfluoride;
C) at least one epoxy component comprising at least two epoxy groups; and
D) at least one catalyst system comprising at least one Lewis acid and at least one thermolatent Lewis base-add uct.

At least one of the surfaces of the lens substrate comprising an optical material selected from at least one of a thermosetting hard resin and a thermoplastic hard resin, preferably in the alternatives ii) and iv) described before the front surface and optionally the back surface of the respective lens substrate, preferably comprises at least one anti-reflective coating. The at least one anti-reflective coating may comprise, for example, one of the anti-reflective coatings disclosed in EP 2 437 084 A1 or in EP 2 850 484 A1. The at least one anti-reflective coating comprised in a coating sequence of the front surface and comprised in a coating sequence of the back surface of the respective lens substrate may be identical to or different from each other.

EP 2 437 084 A1 discloses an optically broadband anti-reflective coating to be applied to a lens element produced of organic polymers, wherein a hard coating is formed adjacent to the lens element. The hard coating serves herein for stress compensation between the inorganic layers of the anti-reflective coating and the surface of the lens substrate. The layers of the anti-reflective coating have a relatively low coefficient of thermal expansion, whereas the lens element produced of organic polymers enjoys a high coefficient of thermal expansion. Further, the surface of the hard coating facing away from the lens element forms a surface with good adhesive strength for the anti-reflective coating. The anti-reflective coating according to EP 2 437 084 A1 comprises exactly one high-refractive-index layer having a thickness of less than 40 nm, preferably less than 20 nm, or at least two high-refractive-index layers having together an overall thickness of less than 40 nm, preferably one of the at least two high-refractive-index layers having a thickness of less than or equal to about 10 nm. The at least one high-refractive index layer is preferably formed of $ZrO_2$, $TiO_2$ or $Ta_2O_5$. According to EP 2 437 084 A1, figure 3 or figure 5, one surface of the lens element each discloses a layer sequence and respective layer thicknesses for an anti-reflective coating on top and adjacent to a hard coating and underneath a superhydrophobic layer as given in following table 2.

Table 2: Layer sequences and layer thicknesses of the anti-reflective coatings according to figures 3 and 5 of EP 2 437 084 A1

| layer sequence, figure 3 of EP 2 437 084 A1 | layer thickness, figure 3 of EP 2 437 084 A1 | layer sequence, figure 5 of EP 2 437 084 A1 | layer thickness, figure 5 of EP 2 437 084 A1 |
|---|---|---|---|
| hard coating | 1-10 $\mu$m | hard coating | 1-10 $\mu$m |
| $Al_2O_3$ | 25 nm | $Al_2O_3$ | 57 nm |
| $SiO_2$ | 25 nm | $SiO_2$ | 25 nm |
| $Al_2O_3$ | 50 nm | $Al_2O_3$ | 44 nm |
| $SiO_2$ | 60 nm | $SiO_2$ | 61 nm |
| $Al_2O_3$ | 115 nm | $Al_2O_3$ | 60 nm |
| $TiO_2$ | 13 nm | $TiO_2$ | 8.5 nm |
| $Al_2O_3$ | 10 nm | $Al_2O_3$ | 45 nm |
| $SiO_2$ | 101 nm | $TiO_2$ | 22 nm |
| superhydrophobic layer | 5 nm | $SiO_2$ | 106 nm |
| - | - | superhydrophobic layer | 5 nm |

EP 2 850 484 A1 discloses an anti-reflective coating having the following properties: an average blue reflectance factor (Rm,B) within a wavelength range of from 420 nanometers to 450 nanometers, which is higher than or equal to 5%, for an angle of incidence ranging from 0° to 15°, a spectral reflectivity curve for an angle of incidence ranging from 0° to 15°, this reflectivity curve having: a maximum reflectivity at a wavelength of less than 435 nanometers, and a full width at half maximum (FWHM) higher than or equal to 80 nanometers, and for an angle of incidence $\theta$ ranging from 0° to 15° and for an angle of incidence $\theta'$ ranging from 30° to 45°, a parameter $\Delta(\theta,\theta')$ defined by the relation $\Delta(\theta,\theta') = 1 - [R\,\theta'\,(435\,nm) / R\,\theta\,(435\,nm)]$, in such a way that this parameter $\Delta(\theta,\theta')$ is higher than or equal to 0.6, where $R\,\theta\,(435\,nm)$ represents the reflectivity value of the main face comprising said filter at a 435 nanometer-wavelength for the angle of incidence $\theta$, and $R\,\theta'\,(435\,nm)$ represents the reflectivity value of the main face comprising said filter at a 435 nanometer-wavelength for the angle of incidence $\theta'$. The anti-reflective coating described may comprise one of the following layer sequences and layer thicknesses shown in table 3.

Table 3: Layer sequences and layer thicknesses of the anti-reflective coatings according to examples 1 to 3 of EP 2 850 484 A1

| layer sequence, example 1 | layer thicknesses, example 1 | layer sequence, example 2 | layer thicknesses, example 2 | layer sequence, example 3 | layer thicknesses, example 3 |
|---|---|---|---|---|---|
| substrate + hard coating | | substrate + hard coating | | substrate + hard coating | |
| $ZrO_2$ | 34 nm | $ZrO_2$ | 44 nm | $ZrO_2$ | 47 nm |
| $SiO_2$ | 35 nm | $SiO_2$ | 45 nm | $SiO_2$ | 50 nm |
| $ZrO_2$ | 73 nm | $ZrO_2$ | 68 nm | $ZrO_2$ | 54 nm |
| $SiO_2$ | 110 nm | $SiO_2$ | 32 nm | $SiO_2$ | 70 nm |
| air | | $ZrO_2$ | 66 nm | $ZrO_2$ | 45 nm |
| - | | $SiO_2$ | 124 nm | $SiO_2$ | 62 nm |
| | | air | | $ZrO_2$ | 53 nm |
| | | - | | $SiO_2$ | 134 nm |
| | | | | air | |

At least one of the surfaces of the lens substrate comprising an optical material selected from at least one of a thermosetting hard resin and a thermoplastic hard resin, preferably in the alternatives ii) and iv) described before the front surface and optionally the back surface of the respective lens substrate, each may comprise at least one clean coating, the at least one clean coating preferably comprising perfluoropolyethers, perfluoroalkyl silanes and/or perfluoroalkyl siloxanes. The at least one clean coating preferably is the outermost coating in the respective coating sequence.

The coating sequence mentioned before or at least one of the coatings mentioned before may be applied to at least one of the uncoated or precoated surfaces of the lens substrate comprising an optical material selected from at least one of a thermosetting hard resin and a thermosetting hard resin.

In case either the front surface or the back surface of the lens substrate comprises an optical material selected from at least one of a thermosetting hard resin and a thermoplastic hard resin and the respective opposite surface comprises an optical material comprising a glass, as for example above described for the alternatives i) or ii), preferably both surfaces of the lens substrate comprises at least one anti-reflective coating, preferably one anti-reflective coating, in the respective coating sequence. Preferably the front surface of the lens substrate comprises an optical material comprising a glass, preferably at least one thin glass, and the back surface of the lens substrate comprises an optical material selected from at least one of a thermosetting hard resin and a thermoplastic hard resin, according to alternative i) mentioned above. An anti-reflection coating comprised in the coating sequence applied to the surface of the lens substrate comprising an optical material selected from at least one of a thermosetting hard resin and a thermoplastic hard resin does not necessarily show the identical or same properties as when the identical anti-reflection coating is comprised in the coating sequence applied to the surface of the lens substrate comprising a glass. An anti-reflection coating is identical to another anti-reflection coating if preferably the layer sequence, the composition of corresponding layers and the corresponding layer thicknesses are identical. In particular with respect to the scratch resistance an anti-reflection coating comprised in the coating sequence applied to the surface of the lens substrate comprising a glass not necessarily achieves the identical or at least a similar Bayer ratio as when the identical anti-reflective coating is comprised in the coating sequence applied to the surface of the lens substrate comprising at least one of a thermosetting hard resin or a thermoplastic hard resin. Surprisingly, if the uncoated surface of the lens substrate comprising a glass is coated with an anti-reflective coating and a superhydrophobic layer according to EP 2 437 084 A1, preferably according to EP 2 437 084 A1, figure 3 or figure 5, i.e. the superhydrophobic layer being the outermost coating thereof, the scratch resistance expressed as Bayer ratio of the resulting coated surface is at least comparable as when the identical anti-reflective coating and the identical superhydrophobic layer are applied to the hard coated surface of the lens substrate comprising a thermosetting hard resin or a thermoplastic hard resin. Further, the adhesion between the anti-reflective coating and the uncoated surface of the lens substrate comprising a glass is excellent even though no hard coating as required in EP 2 437 084 A1 or any other coating in between the surface of the lens substrate and the anti-reflective coating is there. In contrast to EP 2 437 084 A1 wherein the hard coating is required to compensate stress between the inorganic layers of the anti-reflective coating and the surface of the lens substrate based on an organic material, or in contrast to EP 2 850 484 A1, wherein also a hard coating is present in between the surface of the lens substrate and the anti-reflective coating, the application of the anti-reflective coating to the surface of the lens substrate comprising a glass, preferably the front surface comprising a thin glass, does not require a hard coating or any other coating in between the surface of the lens substrate comprising the glass and the anti-reflective coating. This is assumed to be due to the coefficient of expansion of the lens substrate comprising a glass being more similar to the coefficient of expansion of the anti-reflective coating than the coefficient of expansion of the lens substrate comprising at least one of a thermosetting hard resin or a thermoplastic hard resin to the coefficient of expansion of the identical anti-reflective coating. A hard coating in between the surface of a lens substrate comprising at least one of a thermosetting hard resin or a thermoplastic hard resin and the anti-reflective coating may behave as a buffer to compensate the different coefficients of expansion. Further, in case of a lens substrate comprising at least one of a thermosetting hard resin or a thermoplastic hard resin the presence of a hard coating is preferable anyway to ensure the scratch resistance of the coated lens. In a lens substrate comprising an optical material comprising at least one of a thermosetting hard resin or a thermoplastic hard resin and an optical material comprising a glass, preferably at least one thin glass, the different coefficients of expansion and the different expansions of the different optical materials due to heat for example, preferably are largely compensated preferably by at least one adhesive used to bind the different optical materials of the lens substrate. Moreover, in a lens substrate comprising an optical material comprising at least one of a thermosetting hard resin or a thermoplastic hard resin and an optical material comprising at least one thin glass, the at least one thin glass exhibits a certain flexibility, thus compensating as well at least partially an expansion of the different optical materials.

As adhesive for binding the different optical materials, a photocurable adhesive as disclosed in EP 3 395 922 A1 may be used.

In view of the drawbacks experienced with applying an anti-reflective coating designed for a coating sequence to be applied to at least one of the front surface and the back surface of a lens substrate comprising a thermosetting hard resin or a thermoplastic hard resin it has been even more surprising that not only the explicitly disclosed anti-reflective coatings of EP 2 437 084 A1, figures 3 and 5, are suitable to be applied to the surface the lens substrate comprising a glass, preferably at least one thin glass, but that also modifications of those explicitly disclosed anti-reflective coatings are suitable as well. The preferably one anti-reflection coating to be directly applied to the surface of the lens substrate comprising a glass, preferably at least one thin glass, preferably comprises a lower part and an upper part. The lower part of the anti-reflective coating preferably comprises an alternating layer sequence of $[L, M]_n$, wherein L preferably is having a wavelength dependent refractive index ranging from 1.473 at 380 nm to 1.456 at 780 nm, M preferably is having a wavelength dependent refractive index ranging from 1.632 at 380 nm to 1.599 at 780 nm, and n preferably is $\geq 1$, further preferably n is ranging from 1 to 10, further preferably from 1 to 8, further preferably from 1 to 6, more preferably from 2 to 5 and most preferably from 2 to 4. Preferably, within the alternating layer sequence $[L, M]_n$ no further layer is in-between the layers L and M. Further preferably, the lower part of the anti-reflective coating comprises a layer M, preferably one single layer M, which is next to, but not necessarily directly adjacent to the surface of the lens substrate comprising a glass, preferably at least one thin glass. Preferably, the layer M is directly adjacent to the surface of the lens substrate comprising a glass, preferably at least one thin glass. Further preferably, the layer M is directly adjacent to the surface of the lens substrate comprising a glass, preferably at least one thin glass, followed by the alternating layer sequence $[L, M]_n$, wherein a layer L of $[L, M]_n$ is next that layer M that is directly adjacent to the surface of the lens substrate comprising a glass, preferably at least one thin glass, and a layer M of $[L, M]_n$ is directly adjacent to the upper part of the anti-reflective coating.

The upper part of the anti-reflective coating preferably comprises a layer sequence $[H, M, L]_m$, wherein H preferably is having a wavelength dependent refractive index ranging from 2.832 at 380 nm to 2.270 at 780 nm, M preferably is having a wavelength dependent refractive index ranging from 1.632 at 380 nm to 1.599 at 780 nm, L preferably is having a wavelength dependent refractive index ranging from 1.473 at 380 nm to 1.456 at 780 nm and m preferably is $\geq 1$, further preferably m is ranging from 1 to 4, more preferably from 1 to 3 and most preferably from 1 to 2. The layer sequence $[H, M, L]_m$ may comprise a further layer different from or identical to any one of the layers H, M, L. In this context, a different layer is a layer that comprises at least another composition or material from any one of the layers of the layer sequence $[H, M, L]_m$. An identical layer is a layer that comprises the identical composition or material but may have another layer thickness as any one of the layers of the layer sequence $[H, M, L]_m$. Preferably identical layers are not directly adjacent to each other, preferably neither in the lower part nor in the upper part nor in between the lower and the upper part of the anti-reflective coating. Further, preferably the layers M and L are identical in the lower part and in the upper part of the anti-reflective coating. Further preferably, the layer M comprises or consists of $Al_xO_y$, wherein x is 1.5 to 2.5 and y is 2.5 to 3.5, preferably x is 2 and y is 3, or comprises or consists of $Pr_eO_f$, wherein e is 1.0 to 6 and f is 2.0 to 11, preferably e is 6 and f is 11, or the layer M comprises or consists of a mixture of $Al_xO_y$ and $Pr_eO_f$ or a mixed oxide of Al and Pr, the layer L comprises or consists of $SiO_z$, wherein z is 1.5 to 2.5, preferably z is 2, and the layer H comprises or consists of $Ti_aO_b$, wherein a is 0.5 to 1.5, preferably a is 1, and b is 1.5 to 2.5, preferably b is 2, or comprises or consists of $Nb_cO_d$, wherein c is 1.5 to 2.5, preferably c is 2 and d is 4.5 to 5.5, preferably d is 5. In an anti-reflective coating comprising at least two layers of M, each layer of M may comprise or consist of $Al_xO_y$, or comprise or consist of $Pr_eO_f$, or a mixture thereof, or a mixed oxide Al and Pr; or at least one of the layers of M may comprise or consist of $Al_xO_y$ and at least one of the layers of M may comprise or consist of $Pr_eO_f$, or a mixture of $Al_xO_y$ and $Pr_eO_f$, or a mixed oxide of Al and Pr. Preferably all layers of M comprise or consist of $Al_xO_y$ or a mixture of $Al_xO_y$ and $Pr_eO_f$ or a mixed oxide of Al and Pr. Commercially available products comprising an oxide of Al and Pr are for example Paso I, Paso II and Paso III, all company Umicore. Alternatively or additionally, in an anti-reflective coating comprising at least two layers of H, each layer of H may comprise or consist of $Ti_aO_b$ or of $Nb_cO_d$; or at least one of the layers of H may comprise or consist of $Ti_aO_b$ and at least one of the layers of H may comprise or consist of $Nb_cO_d$. Preferably all layers of H comprise or consist of $Ti_aO_b$.

The total thickness of the anti-reflective coating preferably is > 300 nm. Further preferably, the total thickness of the anti-reflective coating lies within a range from 310 nm to 760 nm, more preferably from 350 nm to 740 nm and most preferably from 390 nm to 660 nm.

Preferably, the ratio of the sum of the layer thicknesses of the layers H und M, t(H+M), to the sum of the layer thicknesses of the at least one layer L, t(L), of the anti-reflective coating is in the range of t(H+M) /t(L) > 0.6 to < 2.0, further preferably of t(H+M) / t(L) > 0.7 to < 1.7, more preferably of t(H+M) / t(L) = 0.8 to 1.5 and most preferably of t(H+M) /t(L) = 0.9 to 1.3. Preferably, the intrinsic stress, which is compressive, of the anti-reflective coating is < 100 MPa. Further preferably, the intrinsic stress of the anti-reflective coating lies within a range from 10 MPa to 90 MPa, more preferably from 30 MPa to 80 MPa. The intrinsic stress of the anti-reflective coating preferably is measured by the deflection of a quartz substrate with an interferometer, preferably the FLX Flexus thin film stress measurement system FLX-2320-S, company Toho Technology.

The anti-reflective coating may comprise at least one of the above listed properties, either alone or in combination. The above listed properties apply as well to any one of the preferred layer sequences of the anti-reflective coating described below, either alone or in combination.

Preferably, the anti-reflective coating comprises, beginning from the surface of the lens substrate comprising a glass, preferably at least one thin glass, at least one of the following layer sequences given in table 4 below, wherein

$\lambda_0$ preferably is selected from any wavelength in the range of from 500 nm to 600 nm, the refractive indices of M, L, H preferably are wavelength dependent, M preferably is having a wavelength dependent refractive index ranging from 1.632 at 380 nm to 1.599 at 780 nm, preferably with wavelength dependent refractive indices of 1.614 at 500 nm to 1.606 at 600 nm, L preferably is having a wavelength dependent refractive index ranging from 1.473 at 380 nm to 1.456 at 780 nm, preferably with wavelength dependent refractive indices of 1.462 at 500 nm and 1.459 at 600 nm, H preferably is having a wavelength dependent refractive index ranging from 2.832 at 380 nm to 2.270 at 780 nm, preferably with wavelength dependent refractive indices of 2.440 at 500 nm and 2.336 at 600 nm. Preferably, M is $Al_xO_y$, wherein x is 1.5 to 2.5, preferably 2, and y is 2.5 to 3.5, preferably 3; L is $SiO_z$, wherein z is 1.5 to 2.5, preferably 2; H is $Ti_aO_b$, wherein a is 0.5 to 1.5, preferably 1, and b is 1.5 to 2.5, preferably 2; or $Nb_cO_d$ wherein c is 1.5 to 2.5, preferably 2, and d is 4.5 to 5.5, preferably 5. Alternatively, the layer M preferably is having a wavelength dependent refractive index ranging from 1.750 at 380 nm to 1.701 at 780 nm, preferably with wavelength dependent refractive indices of 1.724 at 500 nm to 1.712 at 600 nm. In this alternative, M is one of the commercially available products comprising an oxide of Al and Pr mentioned before. As mentioned before, in an anti-reflective coating comprising at least two layers of M and/or at least two layers of H the respective layer M or H may comprise or consist of the identical composition or of a different composition.

Table 4: Preferred layer sequences and layer thicknesses of the anti-reflective coating

| substrate | Substrate | substrate |
|---|---|---|
| $0.41622 \cdot \lambda_0/4 \cdot M$-$0.89369 \cdot \lambda_0/4 \cdot M$ | $0.64253 \cdot \lambda_0/4 \cdot M$-$0.89614 \cdot \lambda_0/4 \cdot M$ | $0.19459 \cdot \lambda_0/4 \cdot L$-$0.23394 \cdot \lambda_0/4 \cdot L$ |
| $0.25968 \cdot \lambda_0/4 \cdot L$-$0.41206 \cdot \lambda_0/4 \cdot L$ | $0.08183 \cdot \lambda_0/4 \cdot L$-$0.35676 \cdot \lambda_0/4 \cdot L$ | $0.48912 \cdot \lambda_0/4 \cdot M$-$0.77248 \cdot \lambda_0/4 \cdot M$ |
| $0.41001 \cdot \lambda_0/4 \cdot M$-$0.76121 \cdot \lambda_0/4 \cdot M$ | $0.80796 \cdot \lambda_0/4 \cdot M$-$0.32864 \cdot \lambda_0/4 \cdot M$ | $0.32489 \cdot \lambda_0/4 \cdot L$-$0.61648 \cdot \lambda_0/4 \cdot L$ |
| $0.57225 \cdot \lambda_0/4 \cdot L$-$0.98335 \cdot \lambda_0/4 \cdot L$ | $0.75891 \cdot \lambda_0/4 \cdot L$-$1.02867 \cdot \lambda_0/4 \cdot L$ | $0.36292 \cdot \lambda_0/4 \cdot M$-$0.54573 \cdot \lambda_0/4 \cdot M$ |
| $0.65779 \cdot \lambda_0/4 \cdot M$-$0.88071 \cdot \lambda_0/4 \cdot M$ | $0.90476 \cdot \lambda_0/4 \cdot M$-$1.41535 \cdot \lambda_0/4 \cdot M$ | $0.48976 \cdot \lambda_0/4 \cdot L$-$0.80061 \cdot \lambda_0/4 \cdot L$ |
| $0.07069 \cdot \lambda_0/4 \cdot H$-$0.16235 \cdot \lambda_0/4 \cdot H$ | $0.10051 \cdot \lambda_0/4 \cdot H$-$0.21603 \cdot \lambda_0/4 \cdot H$ | $0.59960 \cdot \lambda_0/4 \cdot M$-$0.83505 \cdot \lambda_0/4 \cdot M$ |
| $0.47009 \cdot \lambda_0/4 \cdot M$-$0.74670 \cdot \lambda_0/4 \cdot M$ | $0.00287 \cdot \lambda_0/4 \cdot M$-$0.45506 \cdot \lambda_0/4 \cdot M$ | $0.10179 \cdot \lambda_0/4 \cdot H$-$0.23052 \cdot \lambda_0/4 \cdot H$ |
| $0.22075 \cdot \lambda_0/4 \cdot H$-$0.44188 \cdot \lambda_0/4 \cdot H$ | $0.80453 \cdot \lambda_0/4 \cdot L$-$1.27591 \cdot \lambda_0/4 \cdot L$ | $0.50401 \cdot \lambda_0/4 \cdot M$-$0.70778 \cdot \lambda_0/4 \cdot M$ |
| $0.97592 \cdot \lambda_0/4 \cdot L$-$1.37164 \cdot \lambda_0/4 \cdot L$ | - | $0.30008 \cdot \lambda_0/4 \cdot H$-$0.48019 \cdot \lambda_0/4 \cdot H$ |
| - | - | $0.99344 \cdot \lambda_0/4 \cdot L$-$1.35331 \cdot \lambda_0/4 \cdot L$ |

Further preferably, the anti-reflective coating comprises at least one of the following layer sequences and layer thicknesses, beginning from the surface of the lens substrate comprising a glass, given in tables 5, 6, 7 and 8 below. With respect to $\lambda_0$, M, L, H the before mentioned applies as well.

Table 5: Further preferred layer sequences and layer thicknesses of the anti-reflective coating

| substrate | substrate | substrate |
|---|---|---|
| $0.74131 \cdot \lambda_0/4 \cdot M$-$0.89369 \cdot \lambda_0/4 \cdot M$ | $0.64253 \cdot \lambda_0/4 \cdot M$-$0.77461 \cdot \lambda_0/4 \cdot M$ | $0.57775 \cdot \lambda_0/4 \cdot M$-$0.69651 \cdot \lambda_0/4 \cdot M$ |
| $0.34275 \cdot \lambda_0/4 \cdot L$-$0.41206 \cdot \lambda_0/4 \cdot L$ | $0.29675 \cdot \lambda_0/4 \cdot L$-$0.35676 \cdot \lambda_0/4 \cdot L$ | $0.27781 \cdot \lambda_0/4 \cdot L$-$0.33399 \cdot \lambda_0/4 \cdot L$ |
| $0.54089 \cdot \lambda_0/4 \cdot M$-$0.65207 \cdot \lambda_0/4 \cdot M$ | $0.51295 \cdot \lambda_0/4 \cdot M$-$0.61840 \cdot \lambda_0/4 \cdot M$ | $0.41001 \cdot \lambda_0/4 \cdot M$-$0.49429 \cdot \lambda_0/4 \cdot M$ |
| $0.70021 \cdot \lambda_0/4 \cdot L$-$0.84181 \cdot \lambda_0/4 \cdot L$ | $0.75891 \cdot \lambda_0/4 \cdot L$-$0.91237 \cdot \lambda_0/4 \cdot L$ | $0.57225 \cdot \lambda_0/4 \cdot L$-$0.68797 \cdot \lambda_0/4 \cdot L$ |
| $0.65779 \cdot \lambda_0/4 \cdot M$-$0.79301 \cdot \lambda_0/4 \cdot M$ | $0.69607 \cdot \lambda_0/4 \cdot M$-$0.83916 \cdot \lambda_0/4 \cdot M$ | $0.68825 \cdot \lambda_0/4 \cdot M$-$0.82973 \cdot \lambda_0/4 \cdot M$ |
| $0.12950 \cdot \lambda_0/4 \cdot H$-$0.16235 \cdot \lambda_0/4 \cdot H$ | $0.11212 \cdot \lambda_0/4 \cdot H$-$0.14056 \cdot \lambda_0/4 \cdot H$ | $0.07069 \cdot \lambda_0/4 \cdot H$-$0.08862 \cdot \lambda_0/4 \cdot H$ |
| $0.49624 \cdot \lambda_0/4 \cdot M$-$0.59825 \cdot \lambda_0/4 \cdot M$ | $0.47547 \cdot \lambda_0/4 \cdot M$-$0.57321 \cdot \lambda_0/4 \cdot M$ | $0.61938 \cdot \lambda_0/4 \cdot M$-$0.74670 \cdot \lambda_0/4 \cdot M$ |
| $0.28033 \cdot \lambda_0/4 \cdot H$-$0.35143 \cdot \lambda_0/4 \cdot H$ | $0.26473 \cdot \lambda_0/4 \cdot H$-$0.33187 \cdot \lambda_0/4 \cdot H$ | $0.35248 \cdot \lambda_0/4 \cdot H$-$0.44188 \cdot \lambda_0/4 \cdot H$ |
| $1.03563 \cdot \lambda_0/4 \cdot L$-$1.24528 \cdot \lambda_0/4 \cdot L$ | $1.03993 \cdot \lambda_0/4 \cdot L$-$1.25044 \cdot \lambda_0/4 \cdot L$ | $1.14072 \cdot \lambda_0/4 \cdot L$-$1.37164 \cdot \lambda_0/4 \cdot L$ |

Table 6: Continuation of table 5

| substrate | substrate | Substrate |
|---|---|---|
| $0.41622 \cdot \lambda_0/4 \cdot M - 0.50178 \cdot \lambda_0/4.M$ | $0.64253 \cdot \lambda_0/4 \cdot M - 0.77461 \cdot \lambda_0/4 \cdot M$ | $0.74334 \cdot \lambda_0/4 \cdot M - 0.89614 \cdot \lambda_0/4 \cdot M$ |
| $0.25968 \cdot \lambda_0/4 \cdot L - 0.31219 \cdot \lambda_0/4 \cdot L$ | $0.29675 \cdot \lambda_0/4 \cdot L - 0.35676 \cdot \lambda_0/4 \cdot L$ | $0.08183 \cdot \lambda_0/4 \cdot L - 0.09838 \cdot \lambda_0/4 \cdot L$ |
| $0.63142 \cdot \lambda_0/4 \cdot M - 0.76121 \cdot \lambda_0/4 \cdot M$ | $0.27260 \cdot \lambda_0/4 \cdot L - 0.32864 \cdot \lambda_0/4 \cdot M$ | $0.80796 \cdot \lambda_0/4 \cdot M - 0.97404 \cdot \lambda_0/4 \cdot M$ |
| $0.81794 \cdot \lambda_0/4 \cdot L - 0.98335 \cdot \lambda_0/4 \cdot L$ | $0.75891 \cdot \lambda_0/4 \cdot L - 0.91237 \cdot \lambda_0/4 \cdot L$ | $0.85564 \cdot \lambda_0/4 \cdot L - 1.02867 \cdot \lambda_0/4 \cdot L$ |
| $0.73054 \cdot \lambda_0/4 \cdot M - 0.88071 \cdot \lambda_0/4 \cdot M$ | $0.90476 \cdot \lambda_0/4 \cdot M - 1.09075 \cdot \lambda_0/4 \cdot M$ | $1.17402 \cdot \lambda_0/4 \cdot M - 1.41535 \cdot \lambda_0/4 \cdot M$ |
| $0.09924 \cdot \lambda_0/4 \cdot H - 0.12440 \cdot \lambda_0/4 \cdot H$ | $0.10051 \cdot \lambda_0/4 \cdot H - 0.12600 \cdot \lambda_0/4 \cdot H$ | $0.17232 \cdot \lambda_0/4 \cdot H - 0.21603 \cdot \lambda_0/4 \cdot H$ |
| $0.47009 \cdot \lambda_0/4 \cdot M - 0.56672 \cdot \lambda_0/4 \cdot M$ | $0.37747 \cdot \lambda_0/4 \cdot L - 0.45506 \cdot \lambda_0/4 \cdot M$ | $0.0028 \cdot \lambda_0/4 \cdot M - 0.00346 \cdot \lambda_0/4 \cdot M$ |
| $0.22075 \cdot \lambda_0/4 \cdot H - 0.27674 \cdot \lambda_0/4 \cdot H$ | $0.80453 \cdot \lambda_0/4 \cdot L - 0.96739 \cdot \lambda_0/4 \cdot L$ | $1.06110 \cdot \lambda_0/4 \cdot L - 1.27591 \cdot \lambda_0/4 \cdot L$ |
| $0.97592 \cdot \lambda_0/4 \cdot L - 1.17348 \cdot \lambda_0/4 \cdot L$ | - | - |

Table 7: Continuation of table 5

| substrate | substrate | substrate |
|---|---|---|
| $0.19459 \cdot \lambda_0/4 \cdot L - 0.23394 \cdot \lambda_0/4 \cdot L$ | $0.19459 \cdot \lambda_0/4 \cdot L - 0.23394 \cdot \lambda_0/4 \cdot L$ | $0.19459 \cdot \lambda_0/4 \cdot L - 0.23394 \cdot \lambda_0/4 \cdot L$ |
| $0.60931 \cdot \lambda_0/4 \cdot M - 0.73457 \cdot \lambda_0/4 \cdot M$ | $0.48913 \cdot \lambda_0/4 \cdot M - 0.58967 \cdot \lambda_0/4 \cdot M$ | $0.64076 \cdot \lambda_0/4 \cdot M - 0.77248 \cdot \lambda_0/4 \cdot M$ |
| $0.51278 \cdot \lambda_0/4 \cdot L - 0.61648 \cdot \lambda_0/4 \cdot L$ | $0.44872 \cdot \lambda_0/4 \cdot L - 0.53946 \cdot \lambda_0/4 \cdot L$ | $0.32489 \cdot \lambda_0/4 \cdot L - 0.39059 \cdot \lambda_0/4 \cdot L$ |
| $0.45267 \cdot \lambda_0/4 \cdot M - 0.54573 \cdot \lambda_0/4 \cdot M$ | $0.37536 \cdot \lambda_0/4 \cdot M - 0.45251 \cdot \lambda_0/4 \cdot M$ | $0.36292 \cdot \lambda_0/4 \cdot M - 0.43753 \cdot \lambda_0/4 \cdot M$ |
| $0.48976 \cdot \lambda_0/4 \cdot L - 0.58880 \cdot \lambda_0/4 \cdot L$ | $0.66595 \cdot \lambda_0/4 \cdot L - 0.80061 \cdot \lambda_0/4 \cdot L$ | $0.53342 \cdot \lambda_0/4 \cdot L - 0.641290 \cdot \lambda_0/4 \cdot L$ |
| $0.64177 \cdot \lambda_0/4 \cdot M - 0.77369 \cdot \lambda_0/4 \cdot M$ | $0.59956 \cdot \lambda_0/4 \cdot M - 0.72281 \cdot \lambda_0/4 \cdot M$ | $0.69267 \cdot \lambda_0/4 \cdot M - 0.83505 \cdot \lambda_0/4 \cdot M$ |
| $0.18388 \cdot \lambda_0/4 \cdot H - 0.23052 \cdot \lambda_0/4 \cdot H$ | $0.17148 \cdot \lambda_0/4 \cdot H - 0.21497 \cdot \lambda_0/4 \cdot H$ | $0.10179 \cdot \lambda_0/4 \cdot H - 0.12761 \cdot \lambda_0/4 \cdot H$ |
| $0.50401 \cdot \lambda_0/4 \cdot M - 0.60762 \cdot \lambda_0/4 \cdot M$ | $0.51636 \cdot \lambda_0/4 \cdot M - 0.62251 \cdot \lambda_0/4 \cdot M$ | $0.58710 \cdot \lambda_0/4 \cdot M - 0.70778 \cdot \lambda_0/4 \cdot M$ |
| $0.31035 \cdot \lambda_0/4 \cdot H - 0.38910 \cdot \lambda_0/4 \cdot H$ | $0.30008 \cdot \lambda_0/4 \cdot H - 0.37619 \cdot \lambda_0/4 \cdot H$ | $0.38304 \cdot \lambda_0/4 \cdot H - 0.48019 \cdot \lambda_0/4 \cdot H$ |
| $1.03965 \cdot \lambda_0/4 \cdot L - 1.25011 \cdot \lambda_0/4 \cdot L$ | $0.99344 \cdot \lambda_0/4 \cdot L - -1.19455 \cdot \lambda_0/4 \cdot L$ | $1.12548 \cdot \lambda_0/4 \cdot L - 1.35332 \cdot \lambda_0/4 \cdot L$ |

Table 8: Continuation of table 5

| |
|---|
| $0.35512 \cdot \lambda_0/4 \cdot L - 0.42693 \cdot \lambda_0/4 \cdot L$ |
| $0.12353 \cdot \lambda_0/4 \cdot M - 0.14892 \cdot \lambda_0/4 \cdot M$ |
| $0.97914 \cdot \lambda_0/4 \cdot L - 1.17715 \cdot \lambda_0/4 \cdot L$ |
| $0.94525 \cdot \lambda_0/4 \cdot M - 1.13955 \cdot \lambda_0/4 \cdot M$ |
| $0.14681 \cdot \lambda_0/4 \cdot L - 0.17650 \cdot \lambda_0/4 \cdot L$ |
| $0.08744 \cdot \lambda_0/4 \cdot M - 0.10541 \cdot \lambda_0/4 \cdot M$ |
| $0.28521 \cdot \lambda_0/4 \cdot H - 0.35754 \cdot \lambda_0/4 \cdot H$ |
| $0.03889 \cdot \lambda_0/4 \cdot M - 0.04689 \cdot \lambda_0/4 \cdot M$ |
| $1.17365 \cdot \lambda_0/4 \cdot L - 1.41123 \cdot \lambda_0/4 \cdot L$ |

The at least one anti-reflective coating may be designed with respect to the desired optical properties thereof preferably by using the software OptiLayer, version 12.37, of company OptiLayer GmbH, 85748 Garching b. München, or the software Essential MacLeod, version 11.00.541, of company Thin Film Center Inc., 2745 E Via Rotunda, Tucson, AZ USA. For designing the at least one anti-reflective coating, the respective refractive indices of the composition of each single layer of the anti-reflective coating preferably are assumed to be wavelength dependent.

As any one of the anti-reflective coatings mentioned before exhibits excellent properties when directly applied to the surface of the lens substrate comprising a glass, each of these anti-reflective coatings is as well highly suitable for being directly applied to at least one of the surfaces of a lens substrate comprising a glass only, i.e. comprising one optical material only. Phrased differently, the anti-reflective coatings described above turned out to be an excellent choice for at least one anti-reflective coating to be applied to a lens substrate comprising a glass only. With respect to the layer sequences and the respective layer thicknesses of such at least one anti-reflective coating it has been surprisingly found that not only the explicitly disclosed anti-reflective coatings of figures 3 and 5 of EP 2 437 084 A1 exhibit at least excellent durability, excellent scratch resistance and/or high adhesion when directly applied to at least one of the surfaces of a lens substrate comprising a glass only but that also at least one of the anti-reflective coatings described above are highly suitable to be directly applied thereto.

At least one of the before described anti-reflective coatings in turn is suitable to be comprised in the coating sequence applied to the surface of a lens substrate comprising at least one of a thermosetting hard resin or a thermoplastic hard resin. An advantage of having at least one anti-reflective coating comprised in the coating sequence applied to the surface of the lens substrate comprising a glass, preferably at least one thin glass, and at least with respect to the layer sequence and the layer materials identical at least one anti-reflective coating comprised in the coating sequence applied to the surface of the lens substrate comprising at least one of a thermosetting hard resin or a thermoplastic hard resin is at least that the optical properties of both surfaces of the coated lens are identical or easily adjustable or that both surfaces of the coated lens may have the same haptic properties, as for example an identical at least one clean coating may be applied to each outermost anti-reflective coating, the at least one clean then being the outermost coating of both surfaces of the coated lens. Alternatively, at least one of the anti-reflective coatings mentioned before may be applied directly to the surface of a lens substrate comprising a glass, preferably to the front surface thereof comprising a thin glass, and at least one the anti-reflective coatings disclosed in EP 2 850 484 A1 for example is comprised in the coating sequence applied to the surface of the lens substrate comprising at least one of a thermosetting hard resin or a thermoplastic hard resin.

A lens substrate comprising at least two optical materials, preferably at least one of the two optical materials selected from a thermosetting hard resin and a thermoplastic hard resin and at least one of the two optical materials comprising a glass, the at least two optical materials may be assembled before at least one of the front surface and/or the back surface of one of the two optical materials is coated or thereafter. In case at least one of the optical materials is coated before being assembled, at least one coating may be present in between the different optical materials.

For the alternative that different optical materials are assembled after at least one of the surfaces thereof has been coated, in a first step each surface of an optical material that is to be coated may be coated, for example by using established coating processes for the respective optical material, and in a second step, the different optical materials are assembled. Alternatively, in a first step each surface of an optical material comprising glass that is to be coated may be coated, for example by using established coating processes, in a second step the optical materials are assembled and optionally in a third step, if at least one of the front surface or the back surface of the lens substrate comprises at least one of a thermosetting hard resin or a thermoplastic hard resin, the respective surface is coated, for example by using established coating processes for the respective optical material. Irrespective of the alternative used, in case the lens substrate comprises at least one coating in-between the optical materials to be assembled, this at least one coating must be applied before assembling the respective optical materials of the lens substrate. In this alternative the lens substrate preferably comprises i) a front surface comprising a glass, a back surface comprising at least one of a thermosetting hard resin or a thermoplastic hard resin; or ii) a front surface comprising at least one of a thermosetting hard resin or a thermoplastic hard resin and a back surface comprising a glass; or iii) a front surface comprising a glass, at least one intermediate layer comprising at least one of a thermosetting hard resin or a thermoplastic hard resin and/or a glass and a back surface comprising a glass; or iv) a front surface comprising at least one of a thermosetting hard resin or a thermoplastic hard resin, at least one intermediate layer comprising a glass and/or at least one of a thermosetting hard resin or a thermoplastic hard resin and a back surface comprising at least one of a thermosetting hard resin or a thermoplastic hard resin. Preferably, the lens substrate comprises a front surface and a back surface according to i) or iii), further preferably according to i). In case, the front surface and the back surface of the lens substrate each comprises at least one anti-reflective coating in the respective coating sequence, preferably one anti-reflective coating, and the residual reflection color of both anti-reflective coatings should be the same. A larger time lag between the application of both anti-reflective coatings may make it more difficult to adjust the residual reflection color of the later applied anti-reflection coating to the first applied one. The difficulty in adjustment of the residual reflection color occurs due to the typical ageing process of an anti-reflection coating. To meet the residual reflection color of the already applied anti-reflective coating requires at least the determination of the residual reflection color thereof and an adjustment of the anti-reflective coating to be applied, for example with respect to the layer sequence and/or the process conditions. However, any deviation from an established coating process is impractical and/or undesirable in high volume production.

If coated optical materials comprising at least one anti-reflective coating having a maximum of reflection between 300 nm and 400 nm are bonded together via a UV curable adhesive for example, reflection losses due to the presence of the at least one anti-reflective coating are preferably taken into consideration. Reflection losses may be balanced out by an increased performance of the UV light source, for example a UV LED, which, in turn, may complicate the heat management and/or may have a negative influence on the durability of the UV light source.

If an optical material comprising a glass and an optical material comprising at least one of a thermosetting hard resin or a thermoplastic hard resin are each first coated with at least one established coating according to the respective established coating process for the respective optical material and afterwards assembled, the resulting properties of each outermost surface not necessarily matches to each other. To match the desired properties, for example the optical properties, the mechanical properties and/or the haptic properties of the front surface and the back surface of the resulting coated lens, preferably at least one of the outermost coatings thereof is adjusted. Further preferably, at least one of the anti-reflective coatings and at least one of the clean coatings, each clean coating being the outermost coating thereof, is adjusted to match the desired properties. The anti-reflective coating and the clean coating may be applied to the same surface of the coated lens or one of the coatings to be adjusted may be applied to the front surface and one may be applied to the back surface of the coated lens.

The at least one anti-reflective coating is preferably deposited under vacuum according to at least one of the following methods: i) by optionally ion-beam assisted electron beam gun evaporation; or ii) by ion-beam sputtering; or iii) by cathode sputtering; or iv) by plasma assisted chemical vapor deposition; or v) by optionally plasma-assisted atomic layer deposition.

In an ion-beam assisted physical vapor deposition simultaneously to the deposition the surface to be coated is bombarded with at least one ion-beam. The at least one ion-beam may be produced by at least one ion gun emitting for example gas ions of $Ar^+$, $Ar_2^+$, $O_2^+$ and/or $N_2^+$. Evaporation under vacuum in the optionally ion-beam assisted evaporation method i) can be done using at least one of the following evaporation sources: a) at least one thermal evaporator to heat the at least one component to be evaporated under vacuum by resistive heating of at least one metal container comprising said at least one component; b) at least one electron beam gun to heat the at least one component to be evaporated under vacuum via an electron beam.

Summarizing, the following embodiments are particularly preferred within the scope of the present invention:

Embodiment 1: Coated lens comprising a lens substrate and at least one coating, wherein the lens substrate comprises (i) at least two different optical materials or (ii) a single optical material, the single optical material being at least one glass.

Embodiment 2: Coated lens according to embodiment 1, wherein the at least two different optical materials comprise at least one optical material comprising at least one glass, preferably at least one thin glass, further preferably at least one thin glass having a thickness in the range of 95 μm to 215 μm, and at least one optical material selected from the group consisting of at least one thermosetting hard resin, at least one thermoplastic hard resin and at least one photochromic material.

Embodiment 3: Coated lens according to any one of the preceding embodiments, wherein i) the front surface of the lens substrate comprises at least one glass, preferably at least one thin glass, and the back surface of the lens substrate comprises at least one optical material selected from the group consisting of at least one thermosetting hard resin, at least one thermoplastic hard resin and at least one photochromic material, preferably selected from the group consisting of at least one thermosetting hard resin and at least one thermoplastic hard resin; or ii) the front surface of the lens substrate comprises at least one optical material selected from the group consisting of at least one thermosetting hard resin, at least one thermoplastic hard resin and at least one photochromic material, and the back surface of the lens surface comprises at least one glass, preferably at least one thin glass; or iii) the front surface of the lens substrate comprises at least one glass, preferably at least one thin glass, the intermediate layer of the lens substrate comprises at least one optical material selected from the group consisting of at least one thermosetting hard resin, at least one thermoplastic hard resin, at least one photochromic material and at least one glass, preferably at least one optical material selected from the group consisting of at least one thermosetting hard resin and at least one thermoplastic hard resin, and the back surface of the lens substrate comprises at least one glass, preferably at least one thin glass; or iv) the front surface of the lens substrate comprises at least one optical material selected from the group consisting of at least one thermosetting hard resin, at least one thermoplastic hard resin and at least one photochromic material, the intermediate layer of the lens substrate comprising at least one optical material selected from the group consisting of at least one glass, at least one thermosetting hard resin, at least one thermoplastic hard resin, preferably at least one glass, and the back surface of the lens substrate comprises at least one optical material selected form the group consisting of at least one thermosetting hard resin and at least one thermoplastic hard resin.

Embodiment 4: Coated lens according to any one of the preceding embodiments, wherein the surface topography of the front surface of the lens substrate comprises or is a spherical surface, and the back surface topography of the lens substrate comprises or is a surface selected from the group consisting of a spherical surface, a cylindrical surface, an aspherical surface, a toroidal surface, an atoroidal surface and a power-variation surface.

Embodiment 5: Coated lens according to any one of the preceding embodiments, wherein the coated lens is a corrective lens or a piano lens.

Embodiment 6: Coated lens according to any one of the preceding embodiments, wherein the at least one anti-reflective coating is directly adjacent to the surface of the lens substrate, preferably the front surface and/or the back surface of the lens substrate, comprising at least one glass.

Embodiment 7: Coated lens according to any one of the preceding embodiments, wherein the front surface and the back surface of the lens substrate comprises at least one anti-reflective coating being identical to or different from each other.

Embodiment 8: Coated lens according to any one of the preceding embodiments, wherein the at least one anti-reflective coating comprises at least one lower part and at least one upper part, preferably one lower part and one upper part, preferably the lower part being next to the surface of the lens substrate, further preferably the lower part comprising a layer sequence $[L, M]_n$, wherein L preferably is having a wavelength dependent refractive index ranging from 1.473 at 380 nm to 1.456 at 780 nm, M preferably is having a wavelength dependent refractive index ranging from 1.632 at 380 nm to 1.599 at 780 nm, and n preferably is $\geq 1$, further preferably n is ranging from 1 to 10, further preferably from 1 to 8, further preferably from 1 to 6, more preferably from 2 to 5 and most preferably from 2 to 4, and the upper part comprising a layer sequence $[H, M, L]_m$, wherein H preferably is having a wavelength dependent refractive index ranging from 2.832 at 380 nm to 2.270 at 780 nm, M preferably is having a wavelength dependent refractive index ranging from 1.632 at 380 nm to 1.599 at 780 nm or M preferably is having a wavelength dependent refractive index ranging from 1.750 at 380 nm to 1.701 at 780 nm, L preferably is having a wavelength dependent refractive index ranging from 1.473 at 380 nm to 1.456 at 780 nm and m preferably is $\geq 1$, further preferably m is ranging from 1 to 4, more preferably from 1 to 3 and most preferably from 1 to 2.

Embodiment 9: Coated lens according to any one of the preceding embodiments, wherein the at least one anti-reflective coating comprises, beginning from the uncoated or precoated surface of the lens substrate, at least $0{,}41622 \cdot \lambda_0/4 \cdot m$ to $0{,}89369 \cdot \lambda_0/4 \cdot M$; $0{,}25968 \cdot \lambda_0/4 \cdot L$ to $0{,}41206 \cdot \lambda_0/4 \cdot L$; $0{,}41001 \cdot \lambda_0/4 \cdot M$ to $0{,}76121 \cdot \lambda_0/4 \cdot M$; $0{,}57225 \cdot \lambda_0/4 \cdot L$ to $0{,}98335 \cdot \lambda_0/4 \cdot L$; $0{,}65779 \cdot \lambda_0/4 \cdot M$ to $0{,}88071 \cdot \lambda_0/4 \cdot M$; $0{,}07069 \cdot \lambda_0/4 \cdot H$ to $0{,}16235 \cdot \lambda_0/4 \cdot H$; $0{,}47009 \cdot \lambda_0/4 \cdot M$ to $0{,}74670 \cdot \lambda_0/4 \cdot M$; $0{,}22075 \cdot \lambda_0/4 \cdot H$ to $0{,}44188 \cdot \lambda_0/4 \cdot H$; $0{,}97592 \cdot \lambda_0/4 \cdot L$ to $1{,}37164 \cdot \lambda_0/4 \cdot L$, preferably with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

Embodiment 10: Coated lens according to any one of the preceding embodiments 1 to 8, wherein the at least one anti-reflective coating comprises, beginning from the uncoated or precoated surface of the lens substrate, at least $0.64253 \cdot \lambda_0/4 \cdot M$ to $0.89614 \cdot \lambda_0/4 \cdot M$; $0.08183 \cdot \lambda_0/4 \cdot L$ to $0.35676 \cdot \lambda_0/4 \cdot L$; $0.80796 \cdot \lambda_0/4 \cdot M$-$0.32864 \cdot \lambda_0/4 \cdot M$; $0.75891 \cdot \lambda_0/4 \cdot L$ to $1.02867 \cdot \lambda_0/4 \cdot L$; $0.90476 \cdot \lambda_0/4 \cdot M$ to $1.41535 \cdot \lambda_0/4 \cdot M$; $0.10051 \cdot \lambda_0/4 \cdot H$ to $0.21603 \cdot \lambda_0/4 \cdot H$; $0.00287 \cdot \lambda_0/4 \cdot M$ to $0.45506 \cdot \lambda_0/4 \cdot M$; $0.80453 \cdot \lambda_0/4 \cdot L$ to $1.27591 \cdot \lambda_0/4 \cdot L$, preferably with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

Embodiment 11: Coated lens according to any one of the preceding embodiments 1 to 8, wherein the at least one anti-reflective coating comprises, beginning from the uncoated or precoated surface of the lens substrate, at least $0.19459 \cdot \lambda_0/4 \cdot L$ to $0.23394 \cdot \lambda_0/4 \cdot L$; $0.48912 \cdot \lambda_0/4 \cdot M$ to $0.77248 \cdot \lambda_0/4 \cdot M$; $0.32489 \cdot \lambda_0/4 \cdot L$ to $0.61648 \cdot \lambda_0/4 \cdot L$; $0.36292 \cdot \lambda_0/4 \cdot M$ to $0.54573 \cdot \lambda_0/4 \cdot M$; $0.48976 \cdot \lambda_0/4 \cdot L$ to $0.80061 \cdot \lambda_0/4 \cdot L$; $0.59960 \cdot \lambda_0/4 \cdot M$ to $0.83505 \cdot \lambda_0/4 \cdot M$; $0.10179 \cdot \lambda_0/4 \cdot H$ to $0.23052 \cdot \lambda_0/4 \cdot H$; $0.50401 \cdot \lambda_0/4 \cdot M$ to $0.70778 \cdot \lambda_0/4 \cdot M$; $0.30008 \cdot \lambda_0/4 \cdot H$ to $0.48019 \cdot \lambda_0/4 \cdot H$; $0.99344 \cdot \lambda_0/4 \cdot L$ to $1.35331 \cdot \lambda_0/4 \cdot L$, preferably with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

Embodiment 12: Coated lens comprising a lens substrate and at least one coating, wherein the lens substrate having a front surface and a back surface comprises a glass and the at least one coating comprises at least one anti-reflective coating, preferably one anti-reflective coating, further preferably one anti-reflective coating being directly adjacent to the front surface and/or the back surface of the lens substrate, the at least one coating comprising at least one lower part and at least one upper part, preferably one lower part and one upper part, the lower part preferably comprising an alternating layer sequence of $[L, M]_n$, with L preferably having a wavelength dependent refractive index ranging from 1.473 at 380 nm to 1.456 at 780 nm, M preferably having a wavelength dependent refractive index ranging from 1.632 at 380 nm to 1.599 at 780 nm or M preferably is having a wavelength dependent refractive index ranging from 1.750 at 380 nm to 1.701 at 780 nm, n preferably being $\geq$ 1, and the upper part preferably comprising a layer sequence $[H, M, L]_m$, with H preferably having a wavelength dependent refractive index ranging from 2.832 at 380 nm to 2.270 at 780 nm, M preferably having a wavelength dependent refractive index ranging from 1.632 at 380 nm to 1.599 at 780 nm or M preferably having a wavelength dependent refractive index ranging from 1.750 at 380 nm to 1.701 at 780 nm, L preferably having a wavelength dependent refractive index ranging from 1.473 at 380 nm to 1.456 at 780 nm and m preferably being $\geq$ 1.

Embodiment 13: Coated lens according to any one of the preceding embodiments 1 to 7 and 12, wherein the at least one anti-reflective coating comprises, beginning from the surface of the lens substrate, at least $0,41622 \cdot \lambda_0/4 \cdot M$ to $0,89369 \cdot \lambda_0/4 \cdot M$; $0,25968 \cdot \lambda_0/4 \cdot L$ to $0,41206 \cdot \lambda_0/4 \cdot L$; $0,41001 \cdot \lambda_0/4 \cdot M$ to $0,76121 \cdot \lambda_0/4 \cdot M$; $0,57225 \cdot \lambda_0/4 \cdot L$ to $0,98335 \cdot \lambda_0/4 \cdot L$; $0,65779 \cdot \lambda_0/4 \cdot M$ to $0,88071 \cdot \lambda_0/4 \cdot M$; $0,07069 \cdot \lambda_0/4 \cdot H$ to $0,16235 \cdot \lambda_0/4 \cdot H$; $0,47009 \cdot \lambda_0/4 \cdot M$ to $0,74670 \cdot \lambda_0/4 \cdot M$; $0,22075 \cdot \lambda_0/4 \cdot H$ to $0,44188 \cdot \lambda_0/4 \cdot H$; $0,97592 \cdot \lambda_0/4 \cdot L$ to $1,37164 \cdot \lambda_0/4 \cdot L$, preferably with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

Embodiment 14: Coated lens according to any one of the preceding embodiments 1 to 7 and 12, wherein the at least one anti-reflective coating comprises, beginning from the surface of the lens substrate, at least $0.64253 \cdot \lambda_0/4 \cdot M$ to $0.89614 \cdot \lambda_0/4 \cdot M$; $0.08183 \cdot \lambda_0/4 \cdot L$ to $0.35676 \cdot \lambda_0/4 \cdot L$; $0.80796 \cdot \lambda_0/4 \cdot M$ to $0.32864 \cdot \lambda_0/4 \cdot M$; $0.75891 \cdot \lambda_0/4 \cdot L$ to $1.02867 \cdot \lambda_0/4 \cdot L$; $0.90476 \cdot \lambda_0/4 \cdot M$ to $1.41535 \cdot \lambda_0/4 \cdot M$; $0.10051 \cdot \lambda_0/4 \cdot H$ to $0.21603 \cdot \lambda_0/4 \cdot H$; $0.00287 \cdot \lambda_0/4 \cdot M$ to $0.45506 \cdot \lambda_0/4 \cdot M$; $0.80453 \cdot \lambda_0/4 \cdot L$ to $1.27591 \cdot \lambda_0/4 \cdot L$, preferably with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

Embodiment 15: Coated lens according to any one of the preceding embodiments 1 to 7 and 12, wherein the at least one anti-reflective coating comprises, beginning from the surface of the lens substrate, at least $0.19459 \cdot \lambda_0/4 \cdot L$ to $0.23394 \cdot \lambda_0/4 \cdot L$; $0.48912 \cdot \lambda_0/4 \cdot M$ to $0.77248 \cdot \lambda_0/4 \cdot M$; $0.32489 \cdot \lambda_0/4 \cdot L$ to $0.61648 \cdot \lambda_0/4 \cdot L$; $0.36292 \cdot \lambda_0/4 \cdot M$ to $0.54573 \cdot \lambda_0/4 \cdot M$; $0.48976 \cdot \lambda_0/4 \cdot L$ to $0.80061 \cdot \lambda_0/4 \cdot L$; $0.59960 \cdot \lambda_0/4 \cdot M$ to $0.83505 \cdot \lambda_0/4 \cdot M$; $0.10179 \cdot \lambda_0/4 \cdot H$ to $0.23052 \cdot \lambda_0/4 \cdot H$; $0.50401 \cdot \lambda_0/4 \cdot M$ to $0.70778 \cdot \lambda_0/4 \cdot M$; $0.30008 \cdot \lambda_0/4 \cdot H$ to $0.48019 \cdot \lambda_0/4 \cdot H$; $0.99344 \cdot \lambda_0/4 \cdot L$ to $1.35331 \cdot \lambda_0/4 \cdot L$, preferably with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

Embodiment 16: Product comprising:

(i) a coated lens or a representation of the coated lens, or
(ii) a coated lens and instructions for using the coated lens, or a representation of the coated lens and a representation of instructions for using the coated lens, or
(iii) at least one representation of the coated lens in form of computer-readable data stored on a computer-readable medium, or
(iv) at least one representation of the coated lens and instructions for using the coated lens, each in form of computer-readable data, and each stored on a computer-readable medium, or
(v) a computer-readable medium comprising at least one representation of the coated lens in form of computer-readable data, or
(vi) a computer-readable medium comprising at least one representation of the coated lens and at least one representation of instructions for using the coated lens, each in form of computer-readable data, or

(vii) at least one representation of the coated lens in form of a computer-readable data signal, or

(viii) at least one representation of the coated lens and at least one representation of instructions for using the coated lens, each in form of a computer-readable data signal,

(ix) a computer-readable data signal comprising at least one representation of the coated lens in form of computer-readable data, or

(x) a computer-readable data signal comprising at least one representation of the coated lens and at least one representation of instructions for using the coated lens, each in form of computer-readable data,

wherein the coated lens comprises at least one lens substrate and at least one coating, the lens substrate comprising (i) at least two optical materials or (ii) a single optical material, the single optical material being at least one glass.

Embodiment 17: Product according to embodiment 16, wherein the coated lens is at least one of the coated lenses according to any one of the preceding embodiments 1 to 15.

Embodiment 18: Product according to any one the preceding embodiments 16 to 17, wherein the representation of the coated lens comprises at least one description selected from the group consisting of at least one surface topography of the coated lens, preferably the surface topography of the front surface and the back surface of the coated lens; at least one surface topography of the lens substrate; preferably the surface topography of the of the front surface and the back surface of the lens substrate; at least the at least one optical material the lens substrate is comprised of; and at least one coating, preferably the coating of the front surface of the lens substrate and the coating of the back surface of the lens substrate.

Embodiment 19: Product according to any one of the preceding embodiments 16 to 18, wherein the surface topography of the coated lens and the surface topography of the lens substrate are assumed to be identical.

Embodiment 20: Product according to any one of the preceding embodiments 16 to 19, wherein the description of each surface topography comprises at least one description from the group consisting of at least one mathematical description of the front surface; at least one mathematical description of the back surface; at least the arrangement of the surface topography of the front surface to the surface topography of the back surface; at least one thickness selected from the group consisting of the centre thickness and the edge thickness; and at least the final size and shape of the coated lens.

Embodiment 21: Product according to any one of the preceding embodiments 16 to 20, wherein the representation of the coated lens is a virtual representation.

Embodiment 22: Product according to any one of the preceding embodiments 16 to 21, wherein the representation of the coated lens is an analogous representation, preferably in paper form.

Embodiment 23: Product according to any one of the preceding embodiments 16 to 19, wherein the instructions for using the coated lens comprises at least one of the instructions selected from the group consisting of the centration point position, defined according to ISO 13666:2019(E), section 3.2.35; the face form angle, defined according to ISO 13666:2019(E), section 3.2.29; the vertex distance, defined according to ISO 13666:2019(E), section 3.2.40; the distance reference point, defined according to ISO 13666:2019(E), section 3.2.20; and the optionally the near reference point, defined according to ISO 13666:2019(E), section 3.2.21.

Embodiment 24: Product according to any one of the preceding embodiments 16 to 23, wherein the representation of instructions for using the coated lens is a virtual representation

Embodiment 25: Product according to any one the preceding embodiments 16 to 21, wherein the representation of instructions for using the coated lens is an analogous representation, preferably in paper form.

Embodiment 26: Product comprising:

(i) an anti-reflective coating comprising $0.41622 \cdot \lambda_0/4 \cdot M$ to $0.89369 \cdot \lambda_0/4 \cdot M$; $0.25968 \cdot \lambda_0/4 \cdot L$ to $0.41206 \cdot \lambda_0/4 \cdot L$; $0.41001 \cdot \lambda_0/4 \cdot M$ to $0.76121 \cdot \lambda_0/4 \cdot M$; $0.57225 \cdot \lambda_0/4 \cdot L$ to $0.98335 \cdot \lambda_0/4 \cdot L$; $0.65779 \cdot \lambda_0/4 \cdot M$ to $0.88071 \cdot \lambda_0/4 \cdot M$; $0.07069 \cdot \lambda_0/4 \cdot H$ to $0.16235 \cdot \lambda_0/4 \cdot H$; $0.47009 \cdot \lambda_0/4 \cdot M$ to $0.74670 \cdot \lambda_0/4 \cdot M$; $0.22075 \cdot \lambda_0/4 \cdot H$ to $0.44188 \cdot \lambda_0/4 \cdot H$; $0.97592 \cdot \lambda_0/4 \cdot L$ to $1.37164 \cdot \lambda_0/4L$, and/or

(ii) an anti-reflective coating comprising $0.64253 \cdot \lambda_0/4 \cdot M$ to $0.89614 \cdot \lambda_0/4 \cdot M$; $0.08183 \cdot \lambda_0/4 \cdot L$ to $0.35676 \cdot \lambda_0/4 \cdot L$;

0.80796·$\lambda_0$/4·M to 0.32864·$\lambda_0$/4·M; 0.75891·$\lambda_0$/4·L to 1.02867·$\lambda_0$/4·L; 0.90476·$\lambda_0$/4·M to 1.41535·$\lambda_0$/4·M; 0.10051·$\lambda_0$/4·H to 0.21603·$\lambda_0$/4·H; 0.00287·$\lambda_0$/4·M to 0.45506·$\lambda_0$/4·M; 0.80453·$\lambda_0$/4·L to 1.27591·$\lambda_0$/4·L, and/or

(iii) an anti-reflective coating comprising 0.19459·$\lambda_0$/4·L to 0.23394·$\lambda_0$/4·L; 0.48912·$\lambda_0$/4·M to 0.77248·$\lambda_0$/4·M; 0.32489·$\lambda_0$/4·L to 0.61648·$\lambda_0$/4·L; 0.36292·$\lambda_0$/4·M to 0.54573·$\lambda_0$/4·M; 0.48976·$\lambda_0$/4·L to 0.80061·$\lambda_0$/4·L; 0.59960·$\lambda_0$/4·M to 0.83505·$\lambda_0$/4·M; 0.10179·$\lambda_0$/4·H to 0.23052·$\lambda_0$/4·H; 0.50401·$\lambda_0$/4·M to 0.70778·$\lambda_0$/4·M; 0.30008·$\lambda_0$/4·H to 0.48019·$\lambda_0$/4·H; 0.99344·$\lambda_0$/4·L to 1.35331·$\lambda_0$/4·L,

in (i), (ii) and (iii) each M having a wavelength dependent refractive index ranging from 1.632 at 380 nm to 1.599 at 780 nm, preferably with wavelength dependent refractive indices of 1.614 at 500 nm to 1.606 at 600 nm or each M having a wavelength dependent refractive index ranging from 1.750 at 380 nm to 1.701 at 780 nm, preferably with wavelength dependent refractive indices of 1.724 at 500 nm to 1.712 at 600 nm, each L having a wavelength dependent refractive index ranging from 1.473 at 380 nm to 1.456 at 780 nm, preferably with wavelength dependent refractive indices of 1.462 at 500 nm and 1.459 at 600 nm, each H having a wavelength dependent refractive index ranging from 2.832 at 380 nm to 2.270 at 780 nm, preferably with wavelength dependent refractive indices of 2.440 at 500 nm and 2.336 at 600 nm and in (i) to (iii) $\lambda_0$ ranging from 500 nm to 600nm, or

(iv) an anti-reflective coating according to at least one selected from the group consisting of (i), (ii) and (iii) and instructions for coating at least one of the anti-reflective coatings according to any one of (i), (ii) or (iii) on at least one surface of an uncoated or precoated lens substrate, preferably the instructions instruct to begin the coating of the surface to be coated with 0.41622·$\lambda_0$/4·M to 0.89369·$\lambda_0$/4·M for (i), with 0.64253·$\lambda_0$/4·M to 0.89614·$\lambda_0$/4·M for (ii), and with 0.19459·$\lambda_0$/4·L to 0.23394·$\lambda_0$/4·L for (iii), or

(v) at least one representation of at least one anti-reflective coating selected from at least one of the groups consisting of (i), (ii) and (iii) in form of computer-readable data stored on a computer-readable medium, or

(vi) at least one representation of at least one anti-reflective coating selected from at least one of the group consisting of (i), (ii) and (iii) and at least one representation of instructions for coating at least one of the anti-reflective coatings according to any one of (i), (ii) or (iii) on at least one uncoated or precoated surface of a lens substrate, each in form of computer-readable data stored on a computer-readable medium, preferably the instructions instruct to begin the coating of the surface to be coated with 0.41622·$\lambda_0$/4·M to 0.89369·$\lambda_0$/4·M for (i), with 0.64253·$\lambda_0$/4·M to 0.89614·$\lambda_0$/4·M for (ii), and with 0.19459·$\lambda_0$/4·L to 0.23394·$\lambda_0$/4·L for (iii), or

(vii) a computer-readable medium comprising at least one representation of at least one anti-reflective coating selected from the group consisting of (i), (ii) and (iii) in form of computer-readable data, or

(viii) a computer-readable medium comprising at least one representation of at least one anti-reflective coating selected from the group consisting of (i), (ii) and (iii) and at least one virtual representation of instructions for coating at least one of the anti-reflective coatings according to any one of (i), (ii) or (iii) to at least one uncoated or precoated surface of a lens substrate, each in form of computer-readable data, preferably the instructions instruct to begin the coating of the surface to be coated with 0.41622·$\lambda_0$/4·M to 0.89369·$\lambda_0$/4·M for (i), with 0.64253·$\lambda_0$/4·M to 0.89614·$\lambda_0$/4·M for (ii), and with 0.19459·$\lambda_0$/4·L to 0.23394·$\lambda_0$/4·L for (iii), or

(ix) at least one representation of at least one of the anti-reflective coatings selected from the group consisting of (i), (ii) and (iii) in form of a computer-readable data signal, or

(x) at least one representation of at least one of the anti-reflective coatings selected from the group consisting of (i), (ii) and (iii) and at least one representation of instructions for coating at least one of the anti-reflective coatings according to any one of (i), (ii) or (iii) to at least one uncoated or precoated surface of a lens substrate, each in form of a computer-readable data signal, preferably the instructions instruct to begin the coating of the surface to be coated with 0.41622·$\lambda_0$/4.M-0.89369·$\lambda_0$/4·M for (i), with 0.64253·$\lambda_0$/4·M-0.89614·$\lambda_0$/4·M for (ii), and with 0.19459·$\lambda_0$/4·L-0.23394·$\lambda_0$/4·L for (iii), or

(xi) a computer-readable data signal comprising at least one representation of at least one anti-reflective coating selected from the group consisting of (i), (ii) and (iii) in form of computer-readable data, or

(xii) a computer-readable data signal comprising at least one virtual representation of at least one anti-reflective coating selected from the group consisting of (i), (ii) and (iii) and at least one representation of instructions for coating at least one of the anti-reflective coatings according to any one of (i), (ii) or (iii) to at least one uncoated or precoated surface of a lens substrate, each in form of a computer-readable data, preferably the instructions instruct to begin the coating of the surface to be coated with 0.41622·$\lambda_0$/4·M to 0.89369·$\lambda_0$/4·M for (i), with 0.64253·$\lambda_0$/4·M to 0.89614·$\lambda_0$/4·M for (ii), and with 0.19459·$\lambda_0$/4·L to 0.23394·$\lambda_0$/4·L for (iii).

Embodiment 27: Product according to embodiment 26, wherein the anti-reflective coating is selected from any one of the anti-reflective coating according to tables 5 to 8.

Embodiment 28: Product according to any one of the preceding embodiments 26 to 27, wherein the lens substrate comprises (i) at least two different optical materials selected from the group consisting of at least one thermosetting hard resin, at least one thermoplastic hard resin and at least one glass, preferably according to any one of the embodiments 2 or 3, or (ii) a single optical material, preferably a glass.

Embodiment 29: Product according to any one of the preceding embodiments 26 to 28, wherein the representation of the anti-reflective coating is a virtual representation.

Embodiment 30: Product according to any one of the preceding embodiments 26 to 28, wherein the representation of the anti-reflective coating is an analogous representation, preferably in paper form.

Embodiment 31: Product according to any one of the preceding embodiments 26 to 30, wherein the instructions for coating comprise at least one instruction selected from the group consisting of the pressure in the chamber used for physical vapor deposition, the evaporation rate, the atmosphere in the chamber used for physical vapor deposition, the temperature, the distance of the material to be evaporated to the surface to be coated, the relative movement of the surface to be coated to the material to be evaporated; and optionally the application of an ion gun.

Embodiment 32: Method for producing a coated lens, the coated lens comprising a lens substrate and at least one coating, the lens substrate comprising at least two optical materials selected from the group consisting of at least one thermosetting hard resin, at least one thermoplastic hard resin and at least one glass, preferably according to any one of the embodiments 2 or 3, wherein the at least two different optical materials are assembled in a first step resulting in the lens substrate and the lens substrate is coated in a second step.

Embodiment 33: Method for producing a coated lens, the coated lens comprising a lens substrate and at least one coating, the lens substrate comprising at least two optical materials selected from the group consisting of at least one thermosetting hard resin, at least one thermoplastic hard resin and at least one glass, preferably according to any one of the embodiments 2 or 3, wherein at least one surface of the at least two different optical materials is coated in a first step resulting in the respective coated optical material and the at least two different optical materials are assembled in a second step.

Embodiment 34: Method for producing a coated lens, the coated lens comprising a lens substrate and at least one coating, the lens substrate comprising at least two optical materials selected from the group consisting of at least one thermosetting hard resin, at least one thermoplastic hard resin and at least one glass, preferably according to any one of the embodiments 2 or 3, wherein at least one surface of the at least two different optical materials is coated in a first step resulting in the respective coated optical material, the at least two different optical materials are assembled in a second step resulting in the lens substrate and at least one uncoated or precoated surface of the lens substrate is coated in a third step.

Embodiment 35: Method according to any one of the preceding embodiments 32 to 34, wherein the coated lens comprises any one of the coated lenses according to any one of the coated lenses according to the embodiment 1 to 15.

**I Manufacturing of the coated lenses / Layer sequence and layer thickness of the coated lenses**

Examples 1 - 4

Before starting the deposition, the surface was evacuated to a pressure below 1E-4 mbar or 2E-5 mbar and then treated with ions from a built-in ion-gun from the End-Hall type. The ion treatment took place at a pressure below 3E-3mbar and at energies between 80 eV up to 140 eV and takes 120 s. A first $Al_xO_y$ layer was deposited by electron beam gun (EBG) evaporation without any use of ion assisted deposition in high vacuum. Then the sequence $[SiO_z Al_xO_y]_n$ with $n \geq 1$ was applied without the use of any ion assisted deposition. During the $Al_xO_y$ layers, the additional oxygen flow had to be adjusted for the desired refractive index, optical transmittance and intrinsic stress.
Then, $Ti_aO_b$ was deposited by EBG evaporation with a deposition rate of 0.4 nm/s, 2.0A ion gun anode current, 160V anode voltage and a maximum of 60 sccm additional O2 flow. The oxygen flow had to be adjusted for the desired refractive index, optical transmittance and intrinsic stress.
Then $Al_xO_y$ was deposited by EBG evaporation without the use of any ion assisted deposition.
Then, an optional $Ti_aO_b$ layer with the same parameters as the first one was deposited.
The last $SiO_2$ layer was deposited at a deposition rate of 1.0 nm/s, 2.0A ion gun anode current, 160V anode voltage and no additional gas flow.
Deposition of the clean coating (Duralon, company Cotec GmbH) was done by thermal evaporation.

Anti-reflective coatings with the layer sequences and the layer thicknesses according to the examples 1 to 4 were applied to the front surface of a thin glass (D263T eco, company Schott AG, thickness 210 $\mu$m, curvature 87 mm) comprised in a lens substrate having a back surface based on a polythiourethane (MR 7, company Mitsui Resin).

|  | example 1 / layer thickness | example 2 / layer thickness | example 3 / layer thickness | example 4 / layer thickness |
|---|---|---|---|---|
| substrate | | | | |
| $Al_2O_3$ | 60 nm | 69 nm | 54 nm | 39 nm |
| $SiO_2$ | 31 nm | 35 nm | 29 nm | 27 nm |
| $Al_2O_3$ | 48 nm | 51 nm | 38 nm | 59 nm |
| $SiO_2$ | 78 nm | 72 nm | 59 nm | 84 nm |
| $Al_2O_3$ | 65 nm | 61 nm | 64 nm | 68 nm |
| $TiO_2$ | 7 nm | 8 nm | 5 nm | 6 nm |
| $Al_2O_3$ | 44 nm | 46 nm | 58 nm | 44 nm |
| $TiO_2$ | 17 nm | 18 nm | 23 nm | 14 nm |
| $SiO_2$ | 107 nm | 106 nm | 117 nm | 100 nm |
| clean coating | 5 nm | 5 nm | 5 nm | 5 nm |

Example 5

Anti-reflective coating and clean coating according to example 1 were applied to the front surface of a thin glass (D263T eco, company Schott AG, thickness 210 $\mu$m, curvature 87 mm) comprised in a lens substrate having a back surface based on a diethylene glycol bisallylcarbonate (RAV700, company Acomon).

Example 6

Anti-reflective coating and clean coating were applied analogously to examples 1 - 4 to the front surface of a ZEISS single vision spherical mineral 1.5 lens substrate with the layer sequence and layer thicknesses given in the table below.

Example 7

Anti-reflective coating and clean coating were applied analogously to examples 1 - 4 to the front surface of a thin glass (D263T eco, company Schott AG, thickness 210 $\mu$m, curvature 87 mm) comprised in a lens substrate having a back surface based on a polythiourethane (MR 7, company Mitsui Resin). The layer sequence and the layer thicknesses are given in the table below.

|  | example 6 / layer thickness | example 7 / layer thickness |
|---|---|---|
| substrate | | |
| $Al_2O_3$ | 60 nm | 60 nm |
| $SiO_2$ | 31 nm | 31 nm |
| $Al_2O_3$ | 48 nm | 48 nm |
| $SiO_2$ | 78 nm | 78 nm |
| $Al_2O_3$ | 65 nm | 65 nm |
| $TiO_2$ | 7 nm | 7 nm |
| $Al_2O_3$ | 44 nm | 44 nm |

(continued)

|  | example 6 / layer thickness | example 7 / layer thickness |
|---|---|---|
| substrate | | |
| $TiO_2$ | 17 nm | 17 nm |
| $SiO_2$ | 107 nm | 107 nm |
| clean coating | 5 nm | 5 nm |

Comparative example 1: Stigmal 16 with anti-reflective coating Superdiafal, company Essilor International.

Comparative example 2: Stylis with anti-reflective coating Crizal Forte UV, company Essilor International.

Comparative example 3: ZEISS single vision spherical mineral 1.5 with anti-reflective coating Super ET, company Carl Zeiss Vision GmbH.

Comparative example 4: ZEISS single vision spherical 1.67 with anti-reflective coating DuraVision Platinum UV, company Carl Zeiss Vision GmbH.

Comparative example 5: Orma with anti-reflective coating Crizal Sapphire, company Essilor International.

Comparative example 6: Plastic 1.5 with anti-reflective coating Hi-Vision LongLife, company Hoya.

Comparative example 7: Uncoated lens substrate having a front surface of thin glass (D263T eco, company Schott AG, thickness 210 $\mu$m, curvature 87 mm) and a back surface based on a polythiourethane (MR 7, company Mitsui Resin).

Comparative example 8: ZEISS single vision spherical mineral 1.5 with anti-reflective coating DuraVision Platinum UV, company Carl Zeiss Vision GmbH.

Comparative example 9: ZEISS single vision spherical mineral 1.5 with anti-reflective coating LotuTec, company Carl Zeiss Vision GmbH.

Comparative example 10: Front surface of comparative example 7 coated with anti-reflective coating LotuTec, company Carl Zeiss Vision GmbH.

Comparative example 11: Front surface of comparative example 7 coated with anti-reflective coating according to example 1 of EP 2 850 484 A1.

## II Characterization of the coated lenses

11.1 Determination of water contact angle

The water contact angle of the coated lenses according to the examples and comparative examples was measured with an OCA20 contact angle meter, company Dataphysics; deionized water was used as liquid.
The water contact angle of the surface of the coated lens comprising the respective anti-reflective coating according to the examples and comparative examples was measured before and after the surface has been subjected to abrasion with a cotton towel (cloth No. 97597, Tricotton GbR) for 800 cycles, every 100 cycles the coated lenses has been turned by 90°. For abrasion the linear abraser BEVS 2803, company BEVS Industrial Co., Ltd. has been used, the weight applied to the surface via the cotton towel was 2.5kg.

|  | water contact angle | water contact angle after 800 cycles |
|---|---|---|
| comparative example 1 | 110 | 74 |
| comparative example 2 | 110 | 110 |
| example 1 | 109 | 108 |

The water contact angle of the coated lenses according to example 1 and the comparative examples before the abrasion is comparable. After the abrasion, the water contact angle of the coated lens according to example 1 and comparative example 2 was unaffected whereas the water contact angle of the coated lens according comparative example 1 was impaired.

II.2 Determination of the adhesion / Cross-cut test

For the determination of the adhesion of the anti-reflective coating of the coated lenses according to the examples or comparative examples the cross-cut test was done, using a blade to cut through the coating to the substrate. At least two cuts are made that intersect at 90 degrees to get a right-angle lattice pattern. The adhesive tape Scotch 600, company 3M, was applied to and removed from the lattice pattern. The cross-cut area was visually examined for any adhesion failure with the naked eye according to the catalogue "QC solutions for coatings and plastics 2018", BYK-Gardner, page 158:

0 means that the edges of the cuts were completely smooth, none of the squares of the lattices were detached;
1 means that at the intersections of the cuts small flakes were detached, a cross-cut area not significantly greater than 5% was affected;
2 means that the coating has been flaked along the edges and/or at the intersections of the cuts, a cross-cut area significantly greater than 5%, but not significantly greater than 15% was affected;
3 means that the coating has been flaked along the edges of the cuts partly or wholly in large ribbons and/or it has been flaked partly or wholly on different parts of the squares, a cross-cut area greater than 15%, but not significantly greater than to 35% was affected;
4 means that the coating has been flaked along the edges of the cuts in large ribbons and/or some squares have been detached partly or wholly, a cross-cut area significantly greater than 35%, but not significantly greater than 65% was affected;
5 means that any degree of flaking that could not even be classified by classification 4.

Further, the cross-cut area was examined for any adhesion failure by means of light microscopy pictures in 50x magnification (microscope: ZEISS Axio Imager).

| example / comparative example | visual inspection | 50x magnification |
|---|---|---|
| comparative example 2 | 2 | 2 |
| example 1 | better than 0, not even lattice pattern visible | 0 |
| example 2 | better than 0, not even lattice pattern visible | 0 |
| example 3 | better than 0, not even lattice pattern visible | 0 |
| example 4 | better than 0, not even lattice pattern visible | 0 |

II.3 Determination of scratch resistance / Diamond scratch test

The scratch resistance of the surface of the coated lens comprising the anti-reflective coating was determined by means of the TABER Shear / Scratch Tester with Diamond Scratch tool (Model 139-58). The threshold value given below is visible by the naked eye when the given weight has been applied to the surface comprising the anti-reflective coating of the respective coated lens. The minimum weight at which conchoidal fracture has been observed in 5x magnification (microscope: ZEISS Axio Imager) is given below as well.

| | Threshold value [g] | Conchoidal fracture [g] |
|---|---|---|
| comparative example 3 | 100 | >200 |
| comparative example 1 | 20 | 200 |
| comparative example 2 | 5,0 | 100 |
| example 5 | 4,0 | >200 |
| example 1 | 2,0 | >200 |

(continued)

|  | Threshold value [g] | Conchoidal fracture [g] |
|---|---|---|
| comparative example 4 (10 coated lenses) | 1,7 (average) | 178 (average) |
| comparative example 5 | 4,0 | 150 |
| comparative example 6 | 3,0 | 100 |

11.4 Determination of the scratch and impact resistance / Bayer ratio

For the determination of the scratch resistance of the coating of the coated lenses according to the examples and comparative examples, the Bayer ratio was determined according to the COLTS operating procedure. A small pan loaded with a coated lens according to the examples or comparative examples as well as loaded with an uncoated diethylene glycol bisallylcarbonate spectacle lens (CR-39 lens) is shaken back and forth a distance of 4 inches, at 150 cycles per minute for 4 minutes. Holes that have been placed across the center section of the pan allow the spectacle lenses to protrude up through the center of each hole, resulting in abrasion in the presence of Kryptonite B as abrasion media. The coated lens according to the examples or comparative examples and the CR-39 lens had a hazemeter measurement completed prior to abrasion and another following abrasion. The resulting haze gain of the coated lens according to the examples and comparative examples is divided into the resulting haze of the CR-39 lens to establish a ratio of how many more times abrasion resistant the spectacle lens according to the examples or comparative examples is compared to the CR-39 lens. The Bayer ratio R is defined as $R = \frac{D_{std}}{D_{test}}$, with $D_{std}$ being the final % haze value of the CR-39 lens minus the initial % haze value of the CR-39 lens and $D_{test}$ being the final % haze value of the coated lens according to the examples or comparative examples minus the initial % haze value of the coated lens according to the examples and comparative examples. The haze-gard plus, company BYK-Gardner GmbH, was used for haze measurement.
The higher the Bayer ratio of a coating, the more scratch resistant is the coating. A coating having a Bayer ratio of 1 means that the coating has the same scratch resistance as the CR-39 lens.

| example / comparative example | Bayer-Ratio |
|---|---|
| comparative example 7 | 8,7 |
| comparative example 3 | 12,6 |
| comparative example 8 | 3,1 |
| comparative example 9 | 5,5 |
| comparative example 10 | 7,1 |
| comparative example 11 | 7,8 |
| example 1 | 18,1 |
| example 2 | 17,2 |
| example 3 | 17,6 |
| example 4 | 17,0 |
| example 5 | 17,0 |
| example 6 | 21,7 |
| example 7 | 23,2 |

II.5 Determination of intrinsic stress

To measure the intrinsic stress of the anti-reflective coatings according to the examples, an interferometer with a wavelength of 633 nm was used:
The curvature of a flat glass was measured before the application of the anti-reflective coating according to the examples to measure the intrinsic or reference curvature of the flat glass R0. Then, the anti-reflective coating according to the examples was applied to this flat glass and curvature R thereof was measured. Using the Stoney-Equation, the intrinsic stress σ was calculated.

Example 1: σ = -61 MPa (compressive stress).

**Claims**

1. Product comprising:

   i) a coated lens or a representation of a coated lens, or

   ii) a coated lens and instructions for using the coated lens, or a representation of a coated lens and a representation of instructions for using the coated lens, or

   iii) at least one representation of the coated lens in form of computer-readable data stored on a computer-readable medium, or

   iv) at least one representation of the coated lens and instructions for using the coated lens, each in form of computer-readable data, and each stored on a computer-readable medium, or

   v) a computer-readable medium comprising at least one representation of the coated lens in form of computer-readable data, or

   vi) a computer-readable medium comprising at least one representation of the coated lens and at least one representation of instructions for using the coated lens, each in form of computer-readable data, or

   vii) at least one representation of the coated lens in form of a computer-readable data signal, or

   viii) at least one representation of the coated lens and at least one representation of instruction for using the coated lens, each in form of a computer-readable data signal,

   ix) a computer-readable data signal comprising at least one representation of the coated lens in form of computer-readable data, or

   x) a computer-readable data signal comprising at least one representation of the coated lens and at least one representation of instructions for using the coated lens, each in form of computer-readable data,

   the coated lens comprises at least one lens substrate and at least one coating, **characterized in that** the lens substrate comprises (i) at least two optical materials, the at least two optical materials being selected from the group consisting of at least one thermosetting hard resin, at least one thermoplastic hard resin, at least one photochromic material and at least one glass, or (ii) a single optical material, the single optical material being at least one glass and the coating comprises at least one anti-reflective coating comprising a lower part and an upper part, the lower part comprising an alternating layer sequence of $[L, M]_n$, with L having a wavelength dependent refractive index ranging from 1.473 at 380 nm to 1.456 at 780 nm, M having a wavelength dependent refractive index ranging from 1.632 at 380 nm to 1.599 at 780 nm or M having a wavelength dependent refractive index ranging from 1.750 at 380 nm to 1.701 at 780 nm, n being $\geq$ 1, and the upper part comprising a layer sequence $[H, M, L]_m$, with H having a wavelength dependent refractive index ranging from 2.832 at 380 nm to 2.270 at 780 nm, M having a wavelength dependent refractive index ranging from 1.632 at 380 nm to 1.599 at 780 nm or M having a wavelength dependent refractive index ranging from 1.750 at 380 nm to 1.701 at 780 nm, L having a wavelength dependent refractive index ranging from 1.473 at 380 nm to 1.456 at 780 nm and m being $\geq$ 1.

2. Product according to claim 1, **characterized in that** the lens substrate comprising the at least two optical materials comprises a) at least one optical material selected from the group consisting of at least one thermosetting hard resin and at least one thermoplastic hard resin and b) at least one optical material comprising at least one glass.

3. Product according to any one of the preceding claims, **characterized in that** the lens substrate comprising the at least two optical materials comprises at least one thin glass having a thickness of 90 μm to 220 μm.

4. Product according to any one of the preceding claims, **characterized in that** the lens substrate comprising the at least two optical materials is selected from a lens substrate comprising

   i) at least one optical material a. comprising at least one glass, the at least one optical material a. forming the front surface of the lens substrate and at least one optical material b. selected from the group consisting of at least one thermosetting hard resin and at least one thermoplastic hard resin, the at least one optical material b. forming the back surface thereof, or

   ii) at least one optical material b. selected from the group consisting of at least one thermosetting hard resin and at least one thermoplastic hard resin, the at least one optical material b. forming the front surface of the lens substrate and at least one optical material a. comprising at least one glass, the at least one optical material a. forming the back surface thereof, or

iii) at least one optical material a. comprising a glass, the at least one optical material a. forming the front surface of the lens substrate, at least one optical material b. selected from the group consisting of at least one thermosetting hard resin and at least one thermoplastic hard resin, the at least one optical material b. forming at least one intermediate layer of the lens substrate and at least one optical material a.' comprising a glass, the at least one optical material a.' forming the back surface thereof, or

iv) at least one optical material b. selected from the group consisting of at least one thermosetting hard resin and at least one thermoplastic hard resin, the at least one optical material b. forming the front surface of the lens substrate, at least one optical material a. comprising at least one glass forming at least one intermediate layer of the lens substrate and at least one optical material b.' selected from the group consisting of at least one thermosetting hard resin and at least one thermoplastic hard resin, the at least one optical material b.' forming the back surface thereof.

5. Product according to any one of the preceding claims, **characterized in that** the at least one anti-reflective coating a comprises at least, beginning form the surface to be coated, $0.41622 \cdot \lambda_0/4 \cdot M$ to $0.89369 \cdot \lambda_0/4 \cdot M$; $0.25968 \cdot \lambda_0/4 \cdot L$ to $0.41206 \cdot \lambda_0/4 \cdot L$; $0.41001 \cdot \lambda_0/4 \cdot M$ to $0.76121 \cdot \lambda_0/4 \cdot M$; $0.57225 \cdot \lambda_0/4 \cdot L$ to $0.98335 \cdot \lambda_0/4 \cdot L$; $0.65779 \cdot \lambda_0/4 \cdot M$ to $0.88071 \cdot \lambda_0/4 \cdot M$; $0.07069 \cdot \lambda_0/4 \cdot H$ to $0.16235 \cdot \lambda_0/4 \cdot H$; $0.47009 \cdot \lambda_0/4 \cdot M$ to $0.74670 \cdot \lambda_0/4 \cdot M$; $0.22075 \cdot \lambda_0/4 \cdot H$ to $0.44188 \cdot \lambda_0/4 \cdot H$; $0.97592 \cdot \lambda_0/4 \cdot L$ to $1.37164 \cdot \lambda_0/4 \cdot L$, with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

6. Product according to any one of the preceding claims 1 to 4, **characterized in that** the at least one anti-reflective coating a comprises at least, beginning form the surface to be coated, $0.64253 \cdot \lambda_0/4 \cdot M$ to $0.89614 \cdot \lambda_0/4 \cdot M$; $0.08183 \cdot \lambda_0/4 \cdot L$ to $0.35676 \cdot \lambda_0/4 \cdot L$; $0.80796 \cdot \lambda_0/4 \cdot M$ to $0.32864 \cdot \lambda_0/4 \cdot M$; $0.75891 \cdot \lambda_0/4 \cdot L$ to $1.02867 \cdot \lambda_0/4 \cdot L$; $0.90476 \cdot \lambda_0/4 \cdot M$ to $1.41535 \cdot \lambda_0/4 \cdot M$; $0.10051 \cdot \lambda_0/4 \cdot H$ to $0.21603 \cdot \lambda_0/4 \cdot H$; $0.00287 \cdot \lambda_0/4 \cdot M$ to $0.45506 \cdot \lambda_0/4 \cdot M$; $0.80453 \cdot \lambda_0/4 \cdot L$ to $1.27591 \cdot \lambda_0/4 \cdot L$, with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

7. Product according to any one of the preceding claims 1 to 4, **characterized in that** the at least one anti-reflective coating a comprises at least, beginning form the surface to be coated, $0.19459 \cdot \lambda_0/4 \cdot L$ to $0.23394 \cdot \lambda_0/4 \cdot L$; $0.48912 \cdot \lambda_0/4 \cdot M$ to $0.77248 \cdot \lambda_0/4 \cdot M$; $0.32489 \cdot \lambda_0/4 \cdot L$ to $0.61648 \cdot \lambda_0/4 \cdot L$; $0.36292 \cdot \lambda_0/4 \cdot M$ to $0.54573 \cdot \lambda_0/4 \cdot M$; $0.48976 \cdot \lambda_0/4 \cdot L$ to $0.80061 \cdot \lambda_0/4 \cdot L$; $0.59960 \cdot \lambda_0/4 \cdot M$ to $0.83505 \cdot \lambda_0/4 \cdot M$; $0.10179 \cdot \lambda_0/4 \cdot H$ to $0.23052 \cdot \lambda_0/4 \cdot H$; $0.50401 \cdot \lambda_0/4 \cdot M$ to $0.70778 \cdot \lambda_0/4 \cdot M$; $0.30008 \cdot \lambda_0/4 \cdot H$ to $0.48019 \cdot \lambda_0/4 \cdot H$; $0.99344 \cdot \lambda_0/4 \cdot L$ to $1.35331 \cdot \lambda_0/4 \cdot L$, with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

8. Product according to any one of the preceding claims, **characterized in that** the at least one anti-reflective coating applied to the uncoated or precoated front surface and the at least one anti-reflective coating applied to the uncoated or precoated back surface of the lens substrate is identical to or different from each other.

9. Product according to any one of the preceding claims, **characterized in that** the coated lens comprises at least one clean coating, each clean coating being the outermost coating of the front surface and/or the back surface of the coated lens.

10. Method for manufacturing a coated lens comprising a lens substrate and at least one coating, **characterized in that** the lens substrate comprises at least two different optical material selected from the group consisting of at least one thermosetting hard resin, at least one thermoplastic hard resin, at least one photochromic material and at least one glass and **in that** the at least two different optical materials are assembled before the at least one coating is applied to at least one surface of the lens substrate.

11. Method according to claim 10, **characterized in that** the at least one coating comprises an anti-reflective coating comprising a lower part and an upper part, the lower part comprising an alternating layer sequence of $[L, M]_n$, with L having a wavelength dependent refractive index ranging from 1.473 at 380 nm to 1.456 at 780 nm, M having a wavelength dependent refractive index ranging from 1.632 at 380 nm to 1.599 at 780 nm or M having a wavelength dependent refractive index ranging from 1.750 at 380 nm to 1.701 at 780 nm, n being $\geq$ 1, and the upper part comprising a layer sequence $[H, M, L]_m$, with H having a wavelength dependent refractive index ranging from 2.832 at 380 nm to 2.270 at 780 nm, M having a wavelength dependent refractive index ranging from 1.632 at 380 nm to 1.599 at 780 nm or M having a wavelength dependent refractive index ranging from 1.750 at 380 nm to 1.701 at 780 nm, L having a wavelength dependent refractive index ranging from 1.473 at 380 nm to 1.456 at 780 nm and m being $\geq$ 1.

12. Method according to any one of the preceding claims 10 to 11, **characterized in that** the at least one anti-reflective coating is applied directly adjacent to the surface of the lens substrate comprising a glass.

13. Product comprising:

i) an anti-reflective coating comprising $0.41622 \cdot \lambda_0/4 \cdot M$ to $0.89369 \cdot \lambda_0 4 \cdot M$; $0.25968 \cdot \lambda_0/4 \cdot L$ to $0.41206 \cdot \lambda_0/4 \cdot L$; $0.41001 \cdot \lambda_0/4 \cdot M$ to $0.76121 \cdot \lambda_0/4 \cdot M$; $0.57225 \cdot \lambda_0/4 \cdot L$ to $0.98335 \cdot \lambda_0/4 \cdot L$; $0.65779 \cdot \lambda_0/4 \cdot M$ to $0.88071 \cdot \lambda_0/4 \cdot M$; $0.07069 \cdot \lambda_0/4 \cdot H$ to $0.16235 \cdot \lambda_0/4 \cdot H$; $0.47009 \cdot \lambda_0/4 \cdot M$ to $0.74670 \cdot \lambda_0/4 \cdot M$; $0.22075 \cdot \lambda_0/4 \cdot H$ to $0.44188 \cdot \lambda_0/4 \cdot H$; $0.97592 \cdot \lambda_0/4 \cdot L$ to $1.37164 \cdot \lambda_0/4 \cdot L$, or a representation of the anti-reflective coating, and/ or

ii) an anti-reflective coating comprising $0.64253 \cdot \lambda_0/4 \cdot M$ to $0.89614 \cdot \lambda_0/4 \cdot M$; $0.08183 \cdot \lambda_0/4 \cdot L$ to $0.35676 \cdot \lambda_0/4 \cdot L$; $0.80796 \cdot \lambda_0/4 \cdot M$ to $0.32864 \cdot \lambda_0/4 \cdot M$; $0.75891 \cdot \lambda_0/4 \cdot L$ to $1.02867 \cdot \lambda_0/4 \cdot L$; $0.90476 \cdot \lambda_0/4 \cdot M$ to $1.41535 \cdot \lambda_0/4 \cdot M$; $0.10051 \cdot \lambda_0/4 \cdot H$ to $0.21603 \cdot \lambda_0/4 \cdot H$; $0.00287 \cdot \lambda_0/4 \cdot M$ to $0.45506 \cdot \lambda_0/4 \cdot M$; $0.80453 \cdot \lambda_0/4 \cdot L$ to $1.27591 \cdot \lambda_0/4 \cdot L$, or a representation of the anti-reflective coating, and/or

iii) an anti-reflective coating comprising $0.19459 \cdot \lambda_0/4 \cdot L$ to $0.23394 \cdot \lambda_0/4 \cdot L$; $0.48912 \cdot \lambda_0/4 \cdot M$ to $0.77248 \cdot \lambda_0/4 \cdot M$; $0.32489 \cdot \lambda_0/4 \cdot L$ to $0.61648 \cdot \lambda_0/4 \cdot L$; $0.36292 \cdot \lambda_0/4 \cdot M$ to $0.54573 \cdot \lambda_0/4 \cdot M$; $0.48976 \cdot \lambda_0/4 \cdot L$ to $0.80061 \cdot \lambda_0/4 \cdot L$; $0.59960 \cdot \lambda_0/4 \cdot M$ to $0.83505 \cdot \lambda_0/4 \cdot M$; $0.10179 \cdot \lambda_0/4 \cdot H$ to $0.23052 \cdot \lambda_0/4 \cdot H$; $0.50401 \cdot \lambda_0/4 \cdot M$ to $0.70778 \cdot \lambda_0/4 \cdot M$; $0.30008 \cdot \lambda_0/4 \cdot H$ to $0.48019 \cdot \lambda_0/4 \cdot H$; $0.99344 \cdot \lambda_0/4 \cdot L$ to $1.35331 \cdot \lambda_0/4 \cdot L$, or a representation of the anti-reflective coating,

in (i), (ii), (iii) each M having a wavelength dependent refractive index ranging from 1.632 at 380 nm to 1.599 at 780 nm, preferably with wavelength dependent refractive indices of 1.614 at 500 nm to 1.606 at 600 nm or M having a wavelength dependent refractive index ranging from 1.750 at 380 nm to 1.701 at 780 nm, preferably a wavelength dependent refractive index of 1.724 at 500 nm to 1.712 at 600 nm, each L having a wavelength dependent refractive index ranging from 1.473 at 380 nm to 1.456 at 780 nm, preferably with wavelength dependent refractive indices of 1.462 at 500 nm and 1.459 at 600 nm, each H having a wavelength dependent refractive index ranging from 2.832 at 380 nm to 2.270 at 780 nm, preferably with wavelength dependent refractive indices of 2.440 at 500 nm and 2.336 at 600 nm and in (i) to (iii) $\lambda_0$ ranging from 500 nm to 600nm, or

iv) an anti-reflective coating selected from at least one of the group consisting of (i), (ii) and (iii) and instructions for coating at least one of the anti-reflective coatings according to any one of (i), (ii) or (iii) to at least one surface to be coated, preferably the instructions instruct to begin the coating of the surface to be coated with $0.41622 \cdot \lambda_0/4 \cdot M$ to $0.89369 \cdot \lambda_0/4 \cdot M$ for (i), with $0.64253 \cdot \lambda_0/4 \cdot M$ to $0.89614 \cdot \lambda_0/4 \cdot M$ for (ii), and with $0.19459 \cdot \lambda_0/4 \cdot L$ to $0.23394 \cdot \lambda_0/4 \cdot L$ for (iii), or

v) at least one representation of at least one anti-reflective coating selected from at least one of the groups consisting of (i), (ii) and (iii) in form of computer-readable data stored on a computer-readable medium, or

vi) at least one representation of at least one anti-reflective coating selected from at least one of the group consisting of (i), (ii) and (iii) and at least one representation of instructions for coating at least one of the anti-reflective coatings according to any one of (i), (ii) or (iii) to at least one surface to be coated, each in form of computer-readable data stored on a computer-readable medium, preferably the instructions instruct to begin the coating of the surface to be coated with $0.41622 \cdot \lambda_0/4 \cdot M$ to $0.89369 \cdot \lambda_0/4 \cdot M$ for (i), with $0.64253 \cdot \lambda_0/4 \cdot M$ to $0.89614 \cdot \lambda_0/4 \cdot M$ for (ii), and with $0.19459 \cdot \lambda_0/4 \cdot L$ to $0.23394 \cdot \lambda_0/4 \cdot L$ for (iii), or

vii) a computer-readable medium comprising at least one representation of at least one anti-reflective coating selected from at least one of the group consisting of (i), (ii) and (iii) in form of computer-readable data, or

viii) a computer-readable medium comprising at least one representation of at least one anti-reflective coating selected from at least one of the group consisting of (i), (ii) and (iii) and at least one representation of instructions for coating at least one of the anti-reflective coatings according to any one of (i), (ii) or (iii) to at least one surface to be coated, each in form of computer-readable data, preferably the instructions instruct to begin the coating of the surface to be coated with $0.41622 \cdot \lambda_0/4 \cdot M$ to $0.89369 \cdot \lambda_0/4 \cdot M$ for (i), with $0.64253 \cdot \lambda_0/4 \cdot M$ to $0.89614 \cdot \lambda_0/4 \cdot M$ for (ii), and with $0.19459 \cdot \lambda_0/4 \cdot L$ to $0.23394 \cdot \lambda_0/4 \cdot L$ for (iii), or

ix) a representation of at least one of the anti-reflective coatings selected from at least one of the group consisting of (i), (ii) and (iii) in form of a computer-readable data signal, or

x) a representation of at least one of the anti-reflective coatings selected from at least one of the group consisting of (i), (ii) and (iii) and at least one representation of instructions for coating at least one of the anti-reflective coatings according to any one of (i), (ii) or (iii) to at least one surface to be coated, each in form of a computer-readable data signal, preferably the instructions instruct to begin the coating of the surface to be coated with $0.41622 \cdot \lambda_0/4 \cdot M$ to $0.89369 \cdot \lambda_0/4 \cdot M$ for (i), with $0.64253 \cdot \lambda_0/4 \cdot M$ to $0.89614 \cdot \lambda_0/4 \cdot M$ for (ii), and with $0.19459 \cdot \lambda_0/4 \cdot L$ to $0.23394 \cdot \lambda_0/4 \cdot L$ for (iii), or

xi) a computer-readable data signal comprising at least one representation of at least one anti-reflective coating selected from at least one of the groups consisting of (i), (ii) and (iii) in form of computer-readable data, or

xii) a computer-readable data signal comprising at least one representation of at least one anti-reflective coating selected from at least one of the group consisting of (i), (ii) and (iii) and at least one virtual representation of instructions for coating at least one of the anti-reflective coatings according to any one of (i), (ii) or (iii) to at least one surface to be coated, each in form of a computer-readable data, preferably the instructions instruct to begin the coating of the surface to be coated with $0.41622 \cdot \lambda_0/4 \cdot M$ to $0.89369 \cdot \lambda_0/4 \cdot M$ for (i), with $0.64253 \cdot \lambda_0/4 \cdot M$ to $0.89614 \cdot \lambda_0/4 \cdot M$ for (ii), and with $0.19459 \cdot \lambda_0/4 \cdot L$ to $0.23394 \cdot \lambda_0/4 \cdot L$ for (iii).

14. Product according to claim 13, **characterized in that** the surface to be coated is the uncoated or precoated surface of a lens substrate, the lens substrate comprising i) at least two different optical materials selected from the group consisting of at least one thermoplastic hard resin, at least one thermosetting hard resin, at least one photochromic material, and at least one glass or ii) a single optical material being a glass.

15. Product according to any one of the preceding claims 13 and 14, **characterized in that** one surface of the lens substrate comprises at least one anti-reflective coating selected from at least one of the group consisting of (i), (ii) and (iii) and the opposite surface of the lens substrate comprises at least one other anti-reflective coating.

## EUROPEAN SEARCH REPORT

Europäisches Patentamt
European Patent Office
Office européen des brevets

Application Number

EP 21 15 8001

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 2 437 084 A1 (CARL ZEISS VISION GMBH [DE]) 4 April 2012 (2012-04-04) * paragraphs [0003], [0004], [0006] – [0011], [0013], [0015] – [0018], [0039] – [0046]; figures 3-6 * | 1-6,8-15 | INV. G02C7/02 G02B1/113 G02B1/115 |
| A | WO 2008/000841 A2 (ESSILOR INT [FR]; ARROUY FREDERIC [FR] ET AL.) 3 January 2008 (2008-01-03) * page 3, line 18 – line 32 * * page 10, line 31 – page 11, line 16 * | 1-4 | |
| A | US 2008/206470 A1 (THOMAS MICHELE [FR] ET AL) 28 August 2008 (2008-08-28) * paragraphs [0031] – [0034] * | 1-4 | |
| Y | EP 3 561 581 A1 (ZEISS CARL VISION INT GMBH [DE]) 30 October 2019 (2019-10-30) * paragraphs [0001], [0007], [0012] – [0014]; table 1 * | 1-6,8-15 | |
| Y | EP 3 561 579 A1 (ZEISS CARL VISION INT GMBH [DE]) 30 October 2019 (2019-10-30) * paragraphs [0013], [0016], [0041], [0042], [0085], [0086]; figures 1, 2; table 1 * | 1-6,8-15 | TECHNICAL FIELDS SEARCHED (IPC) G02C G02B |
| Y | EP 2 492 250 A1 (NITTO DENKO CORP [JP]) 29 August 2012 (2012-08-29) * paragraphs [0007] – [0015], [0033], [0034]; figures 1(a), 1(b) * | 1-6,8-15 | |
| A | US 2010/134752 A1 (TODA MITSUHIRO [JP] ET AL) 3 June 2010 (2010-06-03) * paragraph [0008] * | 1-4 | |

-/--

The present search report has been drawn up for all claims

| Place of search | Date of completion of the search | Examiner |
|---|---|---|
| Munich | 9 December 2021 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

Application Number

EP 21 15 8001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 41 00 831 A1 (JENOPTIK JENA GMBH [DE]) 8 August 1991 (1991-08-08) * the whole document * | 1-15 | |
| A | US 2015/138638 A1 (MASHIMO TAKAHIRO [JP] ET AL) 21 May 2015 (2015-05-21) * the whole document * | 1-15 | |
| A | US 2007/030569 A1 (LU YIWEI [US] ET AL) 8 February 2007 (2007-02-08) * the whole document * | 1-15 | |
| A | US 2012/013845 A1 (CONTE DOMINIQUE [FR] ET AL) 19 January 2012 (2012-01-19) * paragraphs [0037], [0128], [0129], [0116], [0117] * | 8,9 | |
| A | US 2016/274276 A1 (BROWN JEFF [US] ET AL) 22 September 2016 (2016-09-22) * paragraphs [0043], [0044], [0048] – [0050] * | 8,15 | |
| | | | TECHNICAL FIELDS SEARCHED (IPC) |
| Y | EP 3 312 662 A1 (ZEISS CARL VISION INT GMBH [DE]) 25 April 2018 (2018-04-25) * paragraphs [0009], [0010], [0041], [0066], [0073], [0074], [0179], [0180] * | 10-12 | |
| Y | WO 2020/190566 A1 (QUANTUM INNOVATIONS INC [US]) 24 September 2020 (2020-09-24) * paragraphs [0047] – [0050]; figure 2 * | 10-12 | |

The present search report has been drawn up for all claims

| Place of search | Date of completion of the search | Examiner |
|---|---|---|
| Munich | 9 December 2021 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 21 15 8001

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 21 15 8001

The Search Division considers that the present European patent application does not comply with the requirements of unity of invention and relates to several inventions or groups of inventions, namely:

        1. claims: 1-4

             Structural properties of the substrate of a coated lens
                         ---

        2. claims: 5-7, 13-15

             Order and corresponding optical thickness of the layers of
             an anti-reflective coating
                         ---

        3. claims: 8, 9

             Spatial arrangement of the anti-reflective coating in a
             coated lens with regard to the substrate and other possible
             existing coatings
                         ---

        4. claims: 10-12

             Manufacturing steps necessary to apply a coating on a
             substrate comprising different materials
                         ---

EP 4 047 412 A1

## ANNEX TO THE EUROPEAN SEARCH REPORT
## ON EUROPEAN PATENT APPLICATION NO.

EP 21 15 8001

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2021

| Patent document cited in search report | | | Publication date | Patent family member(s) | | Publication date |
|---|---|---|---|---|---|---|
| EP 2437084 | A1 | 04-04-2012 | | CN | 102565890 A | 11-07-2012 |
| | | | | DE | 102010048088 A1 | 05-04-2012 |
| | | | | EP | 2437084 A1 | 04-04-2012 |
| | | | | ES | 2400314 T3 | 09-04-2013 |
| | | | | JP | 6129468 B2 | 17-05-2017 |
| | | | | JP | 6275781 B2 | 07-02-2018 |
| | | | | JP | 2012088700 A | 10-05-2012 |
| | | | | JP | 2016173613 A | 29-09-2016 |
| | | | | US | 2012081792 A1 | 05-04-2012 |
| | | | | US | 2015153484 A1 | 04-06-2015 |
| WO 2008000841 | A2 | 03-01-2008 | | AU | 2007264948 A1 | 03-01-2008 |
| | | | | BR | PI0714043 A2 | 18-12-2012 |
| | | | | CA | 2655480 A1 | 03-01-2008 |
| | | | | CN | 101512389 A | 19-08-2009 |
| | | | | EP | 2033019 A2 | 11-03-2009 |
| | | | | JP | 2009541808 A | 26-11-2009 |
| | | | | KR | 20090021188 A | 27-02-2009 |
| | | | | US | 2008002260 A1 | 03-01-2008 |
| | | | | WO | 2008000841 A2 | 03-01-2008 |
| US 2008206470 | A1 | 28-08-2008 | | AU | 2008223906 A1 | 12-09-2008 |
| | | | | CA | 2679745 A1 | 12-09-2008 |
| | | | | CN | 101617248 A | 30-12-2009 |
| | | | | EP | 2122392 A1 | 25-11-2009 |
| | | | | FR | 2913116 A1 | 29-08-2008 |
| | | | | JP | 6022743 B2 | 09-11-2016 |
| | | | | JP | 6143729 B2 | 07-06-2017 |
| | | | | JP | 2010519586 A | 03-06-2010 |
| | | | | JP | 2015035000 A | 19-02-2015 |
| | | | | KR | 20100014819 A | 11-02-2010 |
| | | | | US | 2008206470 A1 | 28-08-2008 |
| | | | | WO | 2008107325 A1 | 12-09-2008 |
| EP 3561581 | A1 | 30-10-2019 | | CN | 112368631 A | 12-02-2021 |
| | | | | EP | 3561581 A1 | 30-10-2019 |
| | | | | US | 2021124189 A1 | 29-04-2021 |
| | | | | WO | 2019206977 A2 | 31-10-2019 |
| EP 3561579 | A1 | 30-10-2019 | | EP | 3561576 A1 | 30-10-2019 |
| | | | | EP | 3561579 A1 | 30-10-2019 |
| | | | | US | 2019324289 A1 | 24-10-2019 |
| EP 2492250 | A1 | 29-08-2012 | | CN | 102574736 A | 11-07-2012 |
| | | | | CN | 108437586 A | 24-08-2018 |
| | | | | EP | 2492250 A1 | 29-08-2012 |

EPO FORM P0459

For more details about this annex : see Official Journal of the European Patent Office, No. 12/82

page 1 of 3

## ANNEX TO THE EUROPEAN SEARCH REPORT
## ON EUROPEAN PATENT APPLICATION NO.                   EP 21 15 8001

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2021

| Patent document cited in search report | | | Publication date | Patent family member(s) | | Publication date |
|---|---|---|---|---|---|---|
| | | | | EP | 2918562 A1 | 16-09-2015 |
| | | | | EP | 3381876 A1 | 03-10-2018 |
| | | | | JP | 5416546 B2 | 12-02-2014 |
| | | | | JP | 2011088789 A | 06-05-2011 |
| | | | | KR | 20120073286 A | 04-07-2012 |
| | | | | TW | 201130648 A | 16-09-2011 |
| | | | | US | 2012196103 A1 | 02-08-2012 |
| | | | | WO | 2011048861 A1 | 28-04-2011 |
| US 2010134752 | A1 | 03-06-2010 | JP | 5430133 B2 | 26-02-2014 |
| | | | JP | 2010128423 A | 10-06-2010 |
| | | | US | 2010134752 A1 | 03-06-2010 |
| | | | US | 2012287394 A1 | 15-11-2012 |
| DE 4100831 | A1 | 08-08-1991 | DD | 298849 A5 | 12-03-1992 |
| | | | DE | 4100831 A1 | 08-08-1991 |
| US 2015138638 | A1 | 21-05-2015 | JP | WO2013183457 A1 | 28-01-2016 |
| | | | US | 2015138638 A1 | 21-05-2015 |
| | | | WO | 2013183457 A1 | 12-12-2013 |
| US 2007030569 | A1 | 08-02-2007 | BR | PI0614380 A2 | 22-03-2011 |
| | | | CA | 2616105 A1 | 15-02-2007 |
| | | | EP | 1910873 A2 | 16-04-2008 |
| | | | US | 2007030569 A1 | 08-02-2007 |
| | | | WO | 2007018974 A2 | 15-02-2007 |
| US 2012013845 | A1 | 19-01-2012 | BR | PI1016050 A2 | 10-05-2016 |
| | | | CA | 2757168 A1 | 30-09-2010 |
| | | | CN | 102449507 A | 09-05-2012 |
| | | | EA | 201101392 A1 | 30-03-2012 |
| | | | EA | 201500603 A1 | 30-09-2015 |
| | | | EP | 2411850 A1 | 01-02-2012 |
| | | | EP | 3190436 A1 | 12-07-2017 |
| | | | EP | 3432039 A1 | 23-01-2019 |
| | | | ES | 2621967 T3 | 05-07-2017 |
| | | | ES | 2701377 T3 | 21-02-2019 |
| | | | FR | 2943798 A1 | 01-10-2010 |
| | | | JP | 2012522259 A | 20-09-2012 |
| | | | JP | 2016028279 A | 25-02-2016 |
| | | | JP | 2017215591 A | 07-12-2017 |
| | | | JP | 2020034924 A | 05-03-2020 |
| | | | TR | 201819081 T4 | 21-01-2019 |
| | | | US | 2012013845 A1 | 19-01-2012 |
| | | | WO | 2010109154 A1 | 30-09-2010 |

EPO FORM P0459

For more details about this annex : see Official Journal of the European Patent Office, No. 12/82

page 2 of 3

## ANNEX TO THE EUROPEAN SEARCH REPORT
## ON EUROPEAN PATENT APPLICATION NO.

EP 21 15 8001

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2021

| Patent document cited in search report | | | Publication date | Patent family member(s) | | | Publication date |
|---|---|---|---|---|---|---|---|
| US 2016274276 | A1 | | 22-09-2016 | AU | 2016232772 | A1 | 12-10-2017 |
| | | | | AU | 2021236531 | A1 | 28-10-2021 |
| | | | | BR | 112017019949 | A2 | 03-07-2018 |
| | | | | CA | 2980015 | A1 | 22-09-2016 |
| | | | | CL | 2017002347 | A1 | 25-05-2018 |
| | | | | CN | 107533154 | A | 02-01-2018 |
| | | | | CO | 2017010000 | A2 | 05-01-2018 |
| | | | | EP | 3271755 | A1 | 24-01-2018 |
| | | | | KR | 20170129209 | A | 24-11-2017 |
| | | | | PE | 20171673 | A1 | 21-11-2017 |
| | | | | US | 2016274276 | A1 | 22-09-2016 |
| | | | | US | 2019265512 | A1 | 29-08-2019 |
| | | | | WO | 2016149644 | A1 | 22-09-2016 |
| | | | | ZA | 201706863 | B | 29-01-2020 |
| EP 3312662 | A1 | | 25-04-2018 | CA | 3041171 | A1 | 26-04-2018 |
| | | | | CN | 109997069 | A | 09-07-2019 |
| | | | | EP | 3312662 | A1 | 25-04-2018 |
| | | | | EP | 3529658 | A1 | 28-08-2019 |
| | | | | KR | 20190086457 | A | 22-07-2019 |
| | | | | US | 2019243161 | A1 | 08-08-2019 |
| | | | | WO | 2018073398 | A1 | 26-04-2018 |
| WO 2020190566 | A1 | | 24-09-2020 | US | 2020301045 | A1 | 24-09-2020 |
| | | | | WO | 2020190566 | A1 | 24-09-2020 |

EPO FORM P0459

For more details about this annex : see Official Journal of the European Patent Office, No. 12/82

**page 3 of 3**

**EP 4 047 412 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0182503 A2
- EP 3396439 A1
- EP 3474063 A1
- WO 2014202391 A1
- EP 1433814 A1
- EP 1602479 A1
- EP 1561571 A1
- WO 03058300 A1

- US 20050171231 A1
- US 20090189303 A1
- US 20020111390 A1
- EP 2578649 A1
- EP 2437084 A1
- EP 2850484 A1
- EP 3395922 A1